# EUROPEAN PATENT APPLICATION

(11) **EP 3 297 269 A1**
(43) Date of publication of application: **21.03.2018**
(21) Application number: 16792122.0
(22) Date of filing: 05.05.2016
(51) Int. Cl.: H04N 5/225

(54) **IMAGE ACQUISITION METHOD AND DEVICE, AND VIDEO MONITORING METHOD AND SYSTEM**

(30) Priority: 12.05.2015 CN 201510239135; 05.06.2015 CN 201510308704
(71) Applicant: Hangzhou Hikvision Digital Technology Co., Ltd., Hangzhou 310051 (CN)
(72) Inventor: DONG, Jitao, Hangzhou, Zhejiang 310051 (CN); JIANG, Haiqing, Hangzhou, Zhejiang 310051 (CN); DU, Anqiang, Hangzhou, Zhejiang 310051 (CN)
(74) Representative: Banzer, Hans-Jörg
(86) International application number: PCT/CN2016/081155
(87) International publication number: WO 2016/180272

(57) **Abstract**

The present disclosure provides an image acquisition method and apparatus and a video monitoring method and system. The image acquisition method is applied in an image acquisition apparatus in a video monitoring system, wherein the image acquisition apparatus is provided with a WiFi detector and an image capturing component; the method comprises: using the image capturing component to acquire a human image containing a human body feature in a target environment; using the WiFi detector to detect and obtain unique identification information of at least one WiFi terminal located in the target environment; enabling the human image and the unique identification information of the at least one WiFi terminal to correspond to each other to generate image data of the human image containing the human body feature and the unique identification information. Relative to the prior art only involving acquisition and output of images, the present disclosure can obtain more monitoring data and provide a basis for implementing automatic early warning analysis.

## Description

The present disclosure claims priority to the Chinese patent application No.201510308704.X, filed with the State Intellectual Property Office of People's Republic of China on June 5, 2015 and entitled "Image acquisition method and System, and Video Monitoring Method and System", and a Chinese patent application No.201510239135.8, filed with the State Intellectual Property Office of People's Republic of China on May 12, 2015 and entitled "Wireless Technology-based Video Monitoring Method, Device, Apparatus and System", which are incorporated herein by reference in its entirety.

### Technical Field

The present disclosure relates to the technical field of video monitoring, and particularly to an image acquisition method and apparatus, a video monitoring method and system, a monitoring early warning method and system, and a digital video recorder.

### Background

Nowadays, application fields of security protection products gradually spread from government departments and large enterprises to communities and society, wherein video monitoring belongs to an important part of the field of security protection. A digital video recorder in a current video monitoring system only involves outputting images acquired by an image acquisition apparatus.

As people's awareness of security protection improves, people hope to perform early warning analysis for the environment monitored by the video monitoring system, for example, perform early warning of existence of suspicious persons or devices so that people can take security countermeasures in time; however, the current video monitoring system only involves acquiring and outputting images, so if a user needs to perform early warning analysis, he can only do in a manual manner, which is time-consuming.

### SUMMARY

Embodiments of the present disclosure aim to provide an image acquisition method and system, a video monitoring method and system, a monitoring early warning method and system, and a digital video recorder to obtain more monitoring data and provide a basis for automatic early warning analysis. Specific technical solutions are as follows.

In a first aspect, embodiments of the present disclosure provide an image acquisition method, which is applied in an image acquisition apparatus in a video monitoring system, wherein the image acquisition apparatus is provided with a WiFi detector and an image capturing component, the method includes:
acquiring, by using the image capturing component, a human image containing a human body feature in a target environment;
detecting and obtaining, by using the WiFi detector, unique identification information of at least one WiFi terminal located in the target environment; and
correlating the human image with the unique identification information of the at least one WiFi terminal to generate image data including the human image containing the human body feature and the unique identification information.

Optionally, detecting and obtaining, by using the WiFi detector, unique identification information of at least one WiFi terminal located in the target environment includes:
detecting, by using the WiFi detector, WiFi signal intensity values of WiFi terminals located in the target environment; and
obtaining unique identification information of at least one WiFi terminal with a WiFi signal intensity value greater than a predetermined intensity threshold.

Optionally, detecting and obtaining, by using the WiFi detector, unique identification information of at least one WiFi terminal located in the target environment includes:
detecting, by using the WiFi detector, WiFi signal durations of WiFi terminals located in the target environment; and
obtaining unique identification information of at least one WiFi terminal with a WiFi signal duration greater than a predetermined duration threshold.

Furthermore, the image acquisition method further includes:
sending the generated image data including the human image containing the human body feature and the unique identification information to a digital video recorder so that the digital video recorder receives and stores the image data including the human image containing the human body feature and the unique identification information.

In a second aspect, an embodiment of the present disclosure provides a video monitoring method, which is applied in a video monitoring system including an image acquisition apparatus and a digital video recorder, wherein the image acquisition apparatus is provided with a WiFi detector and an image capturing component; the method includes:
acquiring, by the image acquisition apparatus using the image capturing component, a human image containing a human body feature in a target environment; detecting and obtaining, by the image acquisition apparatus using the WiFi detector, unique identification information of at least one WiFi terminal located in the target environment; correlating the human image with the unique identification information of the at least one WiFi terminal to generate image data including the human image containing the human body feature and the unique identification information; and sending the generated image data including the human image containing the human body feature and the unique identification information to the digital video recorder; and
receiving and storing, by the digital video recorder, the image data including the human image containing the human body feature and the unique identification information sent by the image acquisition apparatus.

Optionally, detecting and obtaining, by the image acquisition apparatus using the WiFi detector, unique identification information of at least one WiFi terminal located in the target environment includes:
detecting, by the image acquisition apparatus using the WiFi detector, WiFi signal intensity values of WiFi terminals located in the target environment, and obtaining unique identification information of at least one WiFi terminal with a WiFi signal intensity value greater than a predetermined intensity threshold.

Optionally, detecting and obtaining, by the image acquisition apparatus using the WiFi detector, unique identification information of at least one WiFi terminal located in the target environment includes:
detecting, by the image acquisition apparatus using the WiFi detector, WiFi signal durations of WiFi terminals located in the target environment, and obtaining unique identification information of at least one WiFi terminal with a WiFi signal duration greater than a predetermined duration threshold.

In a third aspect, an embodiment of the present disclosure further provides an image acquisition apparatus, which is applied in a video monitoring system, wherein the image acquisition apparatus includes: an image capturing component, a WiFi detector and a data processor; and wherein,
the image capturing component is configured to acquire a human image containing a human body feature in a target environment;
the WiFi detector is configured to detect and obtain unique identification information of at least one WiFi terminal located in the target environment; and
the data processor is configured to acquire, by using the image capturing component, a human image containing a human body feature in a target environment; detect and obtain, by using the WiFi detector, unique identification information of at least one WiFi terminal located in the target environment; correlate the human image with the unique identification information of the at least one WiFi terminal to generate image data including the human image containing the human body feature and the unique identification information.

Optionally, the data processor is configured to detect, by using the WiFi detector, WiFi signal intensity values of WiFi terminals located in the target environment, and obtain unique identification information of at least one WiFi terminal with a WiFi signal intensity value greater than a predetermined intensity threshold.

Optionally, the data processor is configured to detect, by using the WiFi detector, WiFi signal durations of WiFi terminals located in the target environment, and obtain unique identification information of at least one WiFi terminal with a WiFi signal duration greater than a predetermined duration threshold.

In a fourth aspect, an embodiment of the present disclosure further provides a video monitoring system, including: an image acquisition apparatus and a digital video recorder, wherein the image acquisition apparatus includes: an image capturing component, a WiFi detector and a data processor; and wherein,
the image capturing component is configured to acquire a human image containing a human body feature in a target environment;
the WiFi detector is configured to detect and obtain unique identification information of at least one WiFi terminal located in the target environment;
the data processor is configured to acquire, by using the image capturing component, a human image containing a human body feature in a target environment; detect and obtain, by using the WiFi detector, unique identification information of at least one WiFi terminal located in the target environment; correlate the human image with the unique identification information of the at least one WiFi terminal to generate image data including the human image containing the human body feature and the unique identification information; and send the generated image data including the human image containing the human body feature and the unique identification information to the digital video recorder; and
the digital video recorder is configured to receive and store the image data including the human image containing the human body feature and the unique identification information sent by the image acquisition apparatus.

Optionally, the data processor is configured to detect, by using the WiFi detector, WiFi signal intensity values of WiFi terminals located in the target environment, and obtain unique identification information of at least one WiFi terminal with a WiFi signal intensity value greater than a predetermined intensity threshold.

Optionally, the data processor is configured to detect, by using the WiFi detector, WiFi signal durations of WiFi terminals located in the target environment, and obtain unique identification information of at least one WiFi terminal with a WiFi signal duration greater than a predetermined duration threshold.

In a fifth aspect, an embodiment of the present disclosure provides an image acquisition apparatus, which is applied in a video monitoring system, wherein the image acquisition apparatus includes: a WiFi detector, an image capturing component and a data processor; and wherein,
the WiFi detector is configured to detect and obtain unique identification information of at least one WiFi terminal located in the target environment;
the image capturing component is configured to acquire a human image containing a human body feature in a target environment;
the data processor is configured to detect and obtain, by using the WiFi detector, unique identification information of at least one WiFi terminal located in a target environment; obtain a human image containing a human body feature in the target environment, wherein the human image is acquired by the image capturing component during a preset time period comprising a moment for obtaining the unique identification information; correlate the obtained human image with the unique identification information of the at least one WiFi terminal to generate image data including the human image containing the human body feature and the unique identification information.

Optionally, the data processor is configured to detect, by using the WiFi detector, WiFi signal intensity values of WiFi terminals located in the target environment, and obtain unique identification information of at least one WiFi terminal with a WiFi signal intensity value greater than a predetermined intensity threshold.

Optionally, the data processor is configured to detect, by using the WiFi detector, WiFi signal durations of WiFi terminals located in the target environment, and obtain unique identification information of at least one WiFi terminal with a WiFi signal duration greater than a predetermined duration threshold.

Optionally, the data processor is configured to, during a preset suspicious time period, detect and obtain, by using the WiFi detector, the unique identification information of the at least one WiFi terminal located in the target environment.

Optionally, the data processor is configured to send the generated image data including the human image containing the human body feature and the unique identification information to a digital video recorder so that the digital video recorder receives and stores the image data including the human image containing the human body feature and the unique identification information.

In a sixth aspect, an embodiment of the present disclosure provides a video monitoring system, including an image acquisition apparatus and a digital video recorder; wherein
the image acquisition apparatus includes: a WiFi detector, an image capturing component and a data processor; and wherein
the WiFi detector is configured to detect and obtain unique identification information of at least one WiFi terminal located in the target environment;
the image capturing component is configured to acquire a human image containing a human body feature in a target environment;
the data processor is configured to detect and obtain, by using the WiFi detector, unique identification information of at least one WiFi terminal located in a target environment; obtain a human image containing a human body feature in the target environment, wherein the human image is acquired by the image capturing component during a preset time period comprising a moment for obtaining the unique identification information; correlate the obtained human image with the unique identification information of the at least one WiFi terminal to generate image data including the human image containing the human body feature and the unique identification information; send the generated image data of the human image containing the human body feature and the unique identification information to a digital video recorder; and
the digital video recorder is configured to receive and store the image data including the human image containing the human body feature and the unique identification information.

Optionally, the data processor is configured to detect, by using the WiFi detector, WiFi signal intensity values of WiFi terminals located in the target environment, and obtain unique identification information of at least one WiFi terminal with a WiFi signal intensity value greater than a predetermined intensity threshold.

Optionally, the data processor is configured to detect, by using the WiFi detector, WiFi signal durations of WiFi terminals located in the target environment, and obtain unique identification information of at least one WiFi terminal with a WiFi signal duration greater than a predetermined duration threshold.

Optionally, the data processor is configured to, during a preset suspicious time period, detect and obtain, by using the WiFi detector, the unique identification information of the at least one WiFi terminal located in the target environment.

In a seventh aspect, an embodiment of the present disclosure provides a video monitoring method, which is applied in an image acquisition apparatus in a video monitoring system, wherein the image acquisition apparatus is provided with a WiFi detector and an image capturing component; the method includes:
detecting and obtaining, by using the WiFi detector, unique identification information of at least one WiFi terminal located in a target environment;
obtaining a human image containing a human body feature in the target environment, wherein the human image is acquired by the image capturing component during a preset time period comprising a moment for obtaining the unique identification information; and
correlating the obtained human image with the unique identification information of the at least one WiFi terminal to generate image data including the human image containing the human body feature and the unique identification information.

Optionally, detecting and obtaining, by using the WiFi detector, unique identification information of at least one WiFi terminal located in the target environment includes:
detecting, by using the WiFi detector, a WiFi signal intensity value of at least one WiFi terminal located in the target environment; and
obtaining unique identification information of at least one WiFi terminal with a WiFi signal intensity value greater than a predetermined intensity threshold.

Optionally, detecting and obtaining, by using the WiFi detector, unique identification information of at least one WiFi terminal located in the target environment includes:
detecting, by using the WiFi detector, WiFi signal durations of WiFi terminals located in the target environment; and
obtaining unique identification information of at least one WiFi terminal with a WiFi signal duration greater than a predetermined duration threshold.

Optionally, detecting and obtaining, by using the WiFi detector, unique identification information of at least one WiFi terminal located in the target environment includes:
during a preset suspicious time period, detecting and obtaining, by using the WiFi detector, the unique identification information of the at least one WiFi terminal located in the target environment.

Optionally, the video monitoring method according to an embodiment of the present disclosure further includes:
sending the generated image data including the human image containing the human body feature and the unique identification information to a digital video recorder so that the digital video recorder receives and stores the image data including the human image containing the human body feature and the unique identification information.

In an eighth aspect, an embodiment of the present disclosure provides a monitoring early warning method, including:
detecting and obtaining, by an image acquisition apparatus using a WiFi detector, unique identification information of at least one WiFi terminal located in a target environment; obtaining a multi-frame human image containing a human body feature in the target environment, wherein the multi-frame human image is acquired by an image capturing component during a preset time period comprising a moment for obtaining the unique identification information; correlating the obtained multi-frame human image with the unique identification information of the at least one WiFi terminal to generate image data including the human image containing the human body feature and the unique identification information; sending the generated image data including the human image containing the human body feature and the unique identification information to a digital video recorder;
receiving and storing, by the digital video recorder, the image data including the human image containing the human body feature and the unique identification information; sending the image data including the human image containing the human body feature and the unique identification information to an early warning signal output device; and
after receiving the image data including the human image containing the human body feature and the unique identification information, outputting, by the early warning signal output device, the image data including the human image containing the human body feature and the unique identification information.

Optionally, the monitoring early warning method further includes:
during a preset suspicious time period, detecting and obtaining, by the image acquisition apparatus using the WiFi detector, the unique identification information of the at least one WiFi terminal located in the target environment.

In a ninth aspect, an embodiment of the present disclosure provides a monitoring early warning system, including: an image acquisition apparatus, a digital video recorder and an early warning signal output device;
wherein the image acquisition apparatus includes: a WiFi detector, an image capturing component, and a data processor; and
wherein the WiFi detector is configured to detect unique identification information of at least one WiFi terminal located in a target environment;
the image capturing component is configured to acquire a multi-frame image containing a human body feature in the target environment;
the data processor is configured to detect and obtain, by using the WiFi detector, unique identification information of at least one WiFi terminal located in a target environment; obtain a multi-frame human image containing a human body feature in the target environment, wherein the multi-frame human image is acquired by the image capturing component during a preset time period comprising a moment for obtaining the unique identification information; correlate the obtained multi-frame human image with the unique identification information of the at least one WiFi terminal to generate image data including the human image containing the human body feature and the unique identification information; send the generated image data of the human image containing the human body feature and the unique identification information to a digital video recorder;
the digital video recorder is configured to receive and store the image data including the human image containing the human body feature and the unique identification information; send the image data including the human image containing the human body feature and the unique identification information to an early warning signal output device; and
the early warning signal output device is configured to, after receiving the image data including the human image containing the human body feature and the unique identification information, output the image data including the human image containing the human body feature and the unique identification information.

In a tenth aspect, an embodiment of the present disclosure provides a video monitoring method, which is applied in a digital video recorder in a video monitoring system, wherein the video monitoring system further includes a WiFi detector and an image acquisition apparatus for acquiring images in a target environment; the method includes:
obtaining unique identification information of at least one WiFi terminal located in the target environment detected by using the WiFi detector;
obtaining a multi-frame human image containing a human body feature in the target environment, wherein the multi-frame human image is acquired by the image acquisition apparatus during a preset time period comprising a moment for obtaining the unique identification information; and
correlating the obtained multi-frame human image with the unique identification information of the at least one WiFi terminal to generate image data including the human image containing the human body feature and the unique identification information..

Optionally, obtaining a multi-frame human image containing a human body feature in the target environment includes:
determining a first position relationship of the WiFi terminal relative to the WiFi detector;
determining a first image acquisition apparatus for acquiring a multi-frame human image containing human body feature, according to the first position relationship and a preset second position relationship between the WiFi detector and the image acquisition apparatus; and
obtaining the multi-frame human image containing human body feature acquired by the first image acquisition apparatus.

Optionally, the WiFi detector is disposed in the digital video recorder, and obtaining unique identification information of at least one WiFi terminal located in the target environment detected by using the WiFi detector includes:
detecting and obtaining, by the digital video recorder using the WiFi detector, the unique identification information of the at least one WiFi terminal located in the target environment.

Optionally, the WiFi detector is disposed in the image acquisition apparatus, and obtaining unique identification information of at least one WiFi terminal located in the target environment detected by using the WiFi detector includes:
receiving the unique identification information of the at least one WiFi terminal located in the target environment reported by the image acquisition apparatus, wherein the unique identification information of the WiFi terminal is the unique identification information of the at least one WiFi terminal located in the target environment detected and obtained by the image acquisition apparatus using the WiFi detector.

Optionally, obtaining a multi-frame human image containing a human body feature in the target environment includes:
receiving a multi-frame human image containing a human body feature in the target environment reported by the image acquisition apparatus.

Optionally, obtaining a multi-frame human image containing human body feature in the target environment includes:
controlling the image acquisition apparatus to acquire a multi-frame human image containing a human body feature in the target environment.

In an eleventh aspect, an embodiment of the present disclosure provides a digital video recorder, which is applied to a video monitoring system, wherein the video monitoring system further includes: a WiFi detector and an image acquisition apparatus for performing image acquisition for a target environment; the digital video recorder includes:
a data processor configured to obtain unique identification information of at least one WiFi terminal located in the target environment detected by using the WiFi detector; obtain a multi-frame human image containing a human body feature in the target environment, wherein the multi-frame human image is acquired by the image acquisition apparatus during a preset time period comprising a moment for obtaining the unique identification information; correlating the obtained multi-frame human image with the unique identification information of the at least one WiFi terminal to generate image data including the human image containing the human body feature and the unique identification information.

Optionally, the WiFi detector is disposed in the digital video recorder, and the digital video recorder uses the WiFi detector to detect and obtain unique identification information of at least one WiFi terminal located in the target environment.

Optionally, the WiFi detector is disposed in the image acquisition apparatus, and the digital video recorder receives the unique identification information of the at least one WiFi terminal located in the target environment reported by the image acquisition apparatus, wherein the unique identification information of the WiFi terminal is the unique identification information of the at least one WiFi terminal located in the target environment detected and obtained by the image acquisition apparatus using the WiFi detector.

In a twelfth aspect, an embodiment of the present disclosure provides a storage medium, wherein the storage medium is configured to store an application program for carrying out the image acquisition method according to the first aspect of embodiments of the present disclosure.

In a thirteenth aspect, an embodiment of the present disclosure provides a storage medium, wherein the storage medium is configured to store an application program for carrying out the video monitoring method according to the second aspect of embodiments of the present disclosure.

In a fourteenth aspect, an embodiment of the present disclosure provides a storage medium, wherein the storage medium is configured to store an application program for carrying out the video monitoring method according to the seventh aspect of embodiments of the present disclosure.

In a fifteenth aspect, an embodiment of the present disclosure provides a storage medium, wherein the storage medium is configured to store an application program for carrying out the monitoring early warning method according to the eighth aspect of embodiments of the present disclosure.

In a sixteenth aspect, an embodiment of the present disclosure provides a storage medium, wherein the storage medium is configured to store an application program for carrying out the video monitoring method according to the tenth aspect of embodiments of the present disclosure.

In a seventeenth aspect, an embodiment of the present disclosure provides an application program, wherein the application program is configured to carry out the image acquisition method according to the first aspect of embodiments of the present disclosure.

In an eighteenth aspect, an embodiment of the present disclosure provides an application program, wherein the application program is configured to carry out the video monitoring method according to the second aspect of embodiments of the present disclosure.

In a nineteenth aspect, an embodiment of the present disclosure provides an application program, wherein the application program is configured to carry out the video monitoring method according to the seventh aspect of embodiments of the present disclosure.

In a twentieth aspect, an embodiment of the present disclosure provides an application program, wherein the application program is configured to carry out the monitoring early warning method according to the eighth aspect of embodiments of the present disclosure.

In a twenty-first aspect, an embodiment of the present disclosure provides an application program, wherein the application program is configured to carry out the video monitoring method according to the tenth aspect of embodiments of the present disclosure;

Relative to the prior art, the image acquisition apparatus, the video monitoring system, the video monitoring method and the digital video recorder according to the embodiments of the present disclosure not merely involve acquisition and output of images, but also can obtain more monitoring data and provide a basis for implementing automatic early warning analysis.

In addition, relative to the prior art, the monitoring early warning method and system according to the embodiments of the present disclosure not merely involve acquisition and output of images, but also can obtain more monitoring data and provide a basis for implementing automatic early warning analysis, and implement early warning processing based on the obtained monitoring data.

### BRIEF DESCRIPTION OF THE DRAWINGS

Figures used in the embodiments and in the prior art are hereunder introduced briefly to more clearly illustrate technical solutions of the embodiments of the present application and the prior art. Obviously, figures described below are only some embodiments of the present disclosure. Those skilled in the art, without the exercise of any inventive skills, may obtain other figures according to these figures.
Fig. 1 is a flow chart of an image acquisition method according to a first aspect of embodiments of the present disclosure;
Fig. 2 is a flow chart of a video monitoring method according to a second aspect of embodiments of the present disclosure;
Fig. 3 is a structural schematic diagram of an image acquisition apparatus according to a third aspect of embodiments of the present disclosure;
Fig. 4 is a structural schematic diagram of a video monitoring system according to a fourth aspect of embodiments of the present disclosure;
Fig. 5 is a flow chart of a video monitoring method according to a seventh aspect of embodiments of the present disclosure;
Fig. 6 is a flow chart of a monitoring early warning method according to an eighth aspect of embodiments of the present disclosure;
Fig. 7 is a structural schematic diagram of a monitoring early warning system according to a ninth aspect of embodiments of the present disclosure;
Fig. 8 is a flow chart of a video monitoring method according to a tenth aspect of embodiments of the present disclosure;
Fig. 9 is a structural schematic diagram of a digital video recorder according to a eleventh aspect of embodiments of the present disclosure.

### DETAILED DESCRIPTION

The present disclosure will be further described in detail with reference to figures and embodiments to make objects, technical solutions and advantages of the present application more apparent. Obviously, embodiments described here are only partial embodiments of the present disclosure, not all embodiments. All other embodiments obtained by those having ordinary skill in the art based on the embodiments of the present disclosure, without making any inventive efforts, fall within the extent of protection of the present disclosure.

In a first aspect, embodiments of the present disclosure provide an image acquisition method to obtain more monitoring data and provide a basis for automatic early warning analysis.

It needs to be appreciated that a video monitoring method provided by embodiments of the present disclosure is applied to an image acquisition apparatus in a video monitoring system. The image acquisition apparatus is provided with a WiFi detector and an image capturing component, wherein the WiFi detector can detect unique identification information of a WiFi terminal located in a target environment, the image capturing component can acquire a human image containing a human body feature in the target environment, and the video monitoring system may further include a Digital Video Recorder (DVR).

It may be appreciated that in practical application, the image acquisition apparatus may be a camera in which at least the WiFi detector and the image capturing component are integrated; certainly, the image acquisition apparatus may also be a combination apparatus of a camera in which at least the image capturing component is integrated, and the WiFi detector, i.e., the camera and the WiFi detector are arranged separately, which is also reasonable. Furthermore, the WiFi detector may specifically be a WiFi probe in the prior art, wherein the WiFi probe is a current device for detecting the WiFi terminal in the ambient environment, and its basic working principle is as follows: creating a WiFi hotspot and acquiring information of an accessible terminal in the ambient environment, for example, unique identification information, WiFi signal intensity value, WiFi signal duration and the like, wherein it may be understood that the unique identification information of the WiFi terminal may be an MAC (Media Access Control) address, and the specific form of the WiFi detector is not limited to the WiFi probe.

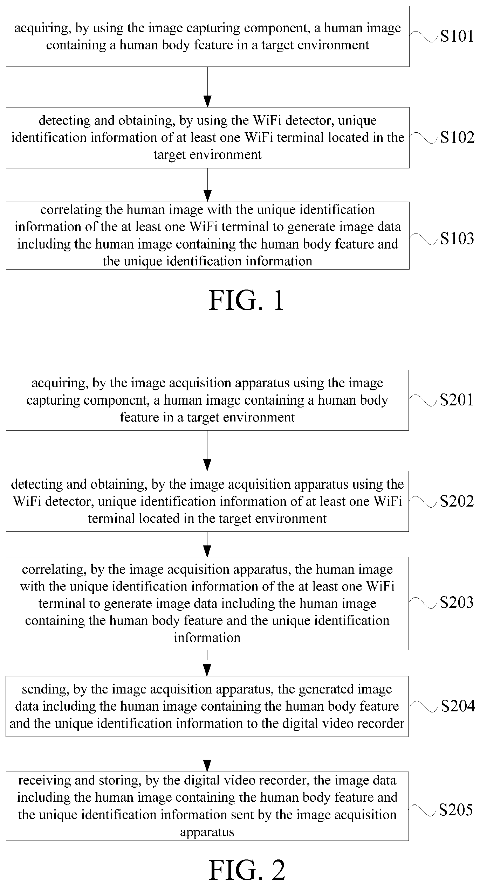

As shown in Fig. 1, the image acquisition method according to the embodiment of the present disclosure may include the following steps:
S 1 01: acquiring, by using the image capturing component, a human image containing a human body feature in a target environment;
wherein the target environment may be an environment that calls for video monitoring such as a shopping mall, a park, a residential area, a house or a personal shop.

In a full procedure of video monitoring, the image acquisition apparatus may use the image capturing component to acquire a human image containing a human body feature in the target environment, wherein the human body feature include but are not limited to human facial features, and furthermore, the image capturing component may use the prior art to acquire a human image containing a human body feature in the target environment.

S 102: detecting and obtaining, by using the WiFi detector, unique identification information of at least one WiFi terminal located in the target environment.

In the full procedure of video monitoring, the image acquisition apparatus may use the WiFi detector to obtain the unique identification information of at least one WiFi terminal located in the target environment, wherein the unique identification information may be an MAC address. The specific technology for implementing the WiFi detector's detection and obtainment of the unique identification information of at least one WiFi terminal located in the target environment is of the prior art and will not be detailed any more here.

It needs to be appreciated that in one implementation mode, since the intensity of the WiFi signal of the WiFi terminal detected by the WiFi detector varies and usually a suspicious WiFi terminal is a device which approaches or enters the target environment, to improve the monitoring accuracy, the using the WiFi detector to detect and obtain unique identification information of at least one WiFi terminal located in the target environment may further include:
detecting, by using the WiFi detector, WiFi signal intensity values of WiFi terminals located in the target environment, and
obtaining unique identification information of at least one WiFi terminal with a WiFi signal intensity value greater than a predetermined intensity threshold.

Wherein the predetermined intensity threshold may be set according to an actual situation or empirical value and is not limited here.

In another specific implementation mode, since the WiFi signal duration of the WiFi terminal detected by the WiFi detector varies, and usually a suspicious WiFi terminal is a device with a longer duration, to improve the monitoring accuracy, the using the WiFi detector to detect and obtain unique identification information of at least one WiFi terminal located in the target environment may further include:
detecting, by using the WiFi detector, WiFi signal durations of WiFi terminals located in the target environment, and
obtaining unique identification information of at least one WiFi terminal with a WiFi signal duration greater than a predetermined duration threshold.

Wherein the predetermined duration threshold may be set according to an actual situation or empirical value and is not limited here.

Certainly, the above specific manner of defining the WiFi detector's detection and obtainment of the unique identification information of at least one WiFi terminal located in the target environment is only an example and should not constitute a limitation of embodiments of the present disclosure.

S103: correlating the human image with the unique identification information of the at least one WiFi terminal to generate image data including the human image containing the human body feature and the unique identification information.

Wherein the image acquisition apparatus may correlate the obtained human image with the unique identification information of the at least one WiFi terminal to generate image data including the human image containing the human body feature and the unique identification information, wherein a frame of human image may be bound to the unique identification information of the at least one WiFi terminal obtained by the corresponding WiFi detector, to generate the image data.

Furthermore, the image acquisition apparatus may send the generated image data of the human image containing the human body feature and the unique identification information to the digital video recorder so that the digital video recorder receives and stores the image data of the human image containing the human body feature and the unique identification information. In practical application, one digital video recorder may correspond to multiple image acquisition apparatuses, i.e., serve as a data server of the multiple image acquisition apparatuses; furthermore, the digital video recorder may, after reception of an image query request sent by the user and carrying the unique identification information, look up to find the human image corresponding to the received unique identification information based on the stored image data, and then feed it back to the user so that the user can perform corresponding early warning analysis processing based on the received human image.

Relative to the prior art, the image acquisition method according to the embodiment of the present disclosure, not merely involving acquisition and output of images, can obtain more monitoring data and provide a basis for implementing automatic early warning analysis.

In a second aspect, based on the image acquisition method according to the first aspect, the embodiment of the present disclosure provides a video monitoring method to obtain more monitoring data and provide a basis for implementing automatic early warning analysis.

It needs to be appreciated that the video monitoring method according to the embodiment of the present disclosure is applied to a video monitoring system which includes an image acquisition apparatus and a digital video recorder, wherein the image acquisition apparatus is provided with the WiFi detector and the image capturing component.

As shown in Fig. 2, the video monitoring method may include the following steps:
S201: acquiring, by the image acquisition apparatus using the image capturing component, a human image containing a human body feature in a target environment;
wherein the target environment may be an environment that calls for video monitoring such as a shopping mall, a park, a residential area, a house or a personal shop.

In a full procedure of video monitoring, the image acquisition apparatus may use the image capturing component to acquire a human image containing a human body feature in the target environment, wherein the human body feature include but are not limited to human facial features, and furthermore, the image capturing component may use the prior art to acquire a human image containing a human body feature in the target environment.

S202: detecting and obtaining, by the image acquisition apparatus using the WiFi detector, unique identification information of at least one WiFi terminal located in the target environment.

In the full procedure of video monitoring, the image acquisition apparatus may use the WiFi detector to obtain the unique identification information of at least one WiFi terminal located in the target environment, wherein the unique identification information may be an MAC address. The specific technology for implementing the WiFi detector's detection and obtainment of the unique identification information of at least one WiFi terminal located in the target environment is of the prior art and will not be detailed any more here.

It needs to be appreciated that in one implementation mode, since the intensity of the WiFi signal of the WiFi terminal detected by the WiFi detector varies and usually a suspicious WiFi terminal is a device which approaches or enters the target environment, to improve the monitoring accuracy, detecting and obtaining, by using the WiFi detector, unique identification information of at least one WiFi terminal located in the target environment may further include:
detecting, by the image acquisition apparatus using the WiFi detector, WiFi signal intensity values of WiFi terminals located in the target environment, and
obtaining unique identification information of at least one WiFi terminal with a WiFi signal intensity value greater than a predetermined intensity threshold.

Wherein the predetermined intensity threshold may be set according to an actual situation or empirical value and is not limited here.

In another specific implementation mode, since the WiFi signal duration of the WiFi terminal detected by the WiFi detector varies, and usually a suspicious WiFi terminal is a device with a longer duration, to improve the monitoring accuracy, detecting and obtaining, by using the WiFi detector, unique identification information of at least one WiFi terminal located in the target environment may further include:
detecting, by the image acquisition apparatus using the WiFi detector, WiFi signal durations of WiFi terminals located in the target environment, and
obtaining unique identification information of at least one WiFi terminal with a WiFi signal duration greater than a predetermined duration threshold.

Wherein the predetermined duration threshold may be set according to an actual situation or empirical value and is not limited here.

Certainly, the above specific manner of defining the WiFi detector's detection and obtainment of the unique identification information of at least one WiFi terminal located in the target environment is only an example and should not constitute a limitation of embodiments of the present disclosure.

S203: correlating, by the image acquisition apparatus, the human image with the unique identification information of the at least one WiFi terminal to generate image data including the human image containing the human body feature and the unique identification information.

Wherein the image acquisition apparatus may correlate the human image with the unique identification information of the at least one WiFi terminal to generate image data including the human image containing the human body feature and the unique identification information, wherein a frame of human image may be bound to the unique identification information of the at least one WiFi terminal obtained by the corresponding WiFi detector, to generate the image data.

S204: sending, by the image acquisition apparatus, the generated image data including the human image containing the human body feature and the unique identification information to the digital video recorder.

S205: receiving and storing, by the digital video recorder, the image data including the human image containing the human body feature and the unique identification information sent by the image acquisition apparatus.

The image acquisition apparatus may send the generated image data of the human image containing the human body feature and the unique identification information to the digital video recorder, so that the digital video recorder receives and stores the image data of the human image containing the human body feature and the unique identification information.

In practical application, one digital video recorder may correspond to multiple image acquisition apparatuses, i.e., serve as a data server of the multiple image acquisition apparatuses; furthermore, the digital video recorder may, after reception of an image query request sent by the user and carrying the unique identification information, look up to find the human image corresponding to the received unique identification information based on the stored image data, and then feed it back to the user so that the user can perform corresponding early warning analysis processing based on the received human image.

Relative to the prior art, the video monitoring method according to the embodiment of the present disclosure, not merely involving acquisition and output of images, can obtain more monitoring data and provide a basis for implementing automatic early warning analysis.

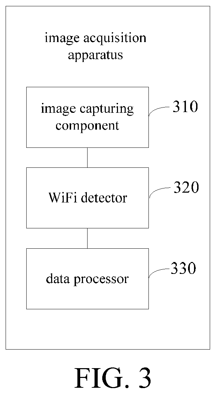

In a third aspect, based on the image acquisition method according to the first aspect, the embodiment of the present disclosure provides an image acquisition apparatus, which is applied in a video monitoring system. As shown in Fig. 3, the image acquisition apparatus includes: an image capturing component 310, a WiFi detector 320 and a data processor 330;
wherein the image capturing component 310 is configured to acquire a human image containing a human body feature in a target environment;
the WiFi detector 320 is configured to detect and obtain unique identification information of at least one WiFi terminal located in the target environment;
the data processor 330 is configured to acquire, by using the image capturing component 310, a human image containing a human body feature in a target environment; detect and obtain, by using the WiFi detector 320, unique identification information of at least one WiFi terminal located in the target environment; correlate the human image with the unique identification information of the at least one WiFi terminal to generate image data including the human image containing the human body feature and the unique identification information.

Specifically, the data processor 330 is configured to detect, by using the WiFi detector 320, WiFi signal intensity values of WiFi terminals located in the target environment, and obtain unique identification information of at least one WiFi terminal with a WiFi signal intensity value greater than a predetermined intensity threshold.

Specifically, the data processor 330 is configured to detect, by using the WiFi detector 320, WiFi signal durations of WiFi terminals located in the target environment, and obtain unique identification information of at least one WiFi terminal with a WiFi signal duration greater than a predetermined duration threshold.

Relative to the prior art, the image acquisition apparatus according to the embodiment of the present disclosure, not merely involving acquisition and output of images, can obtain more monitoring data and provide a basis for implementing automatic early warning analysis.

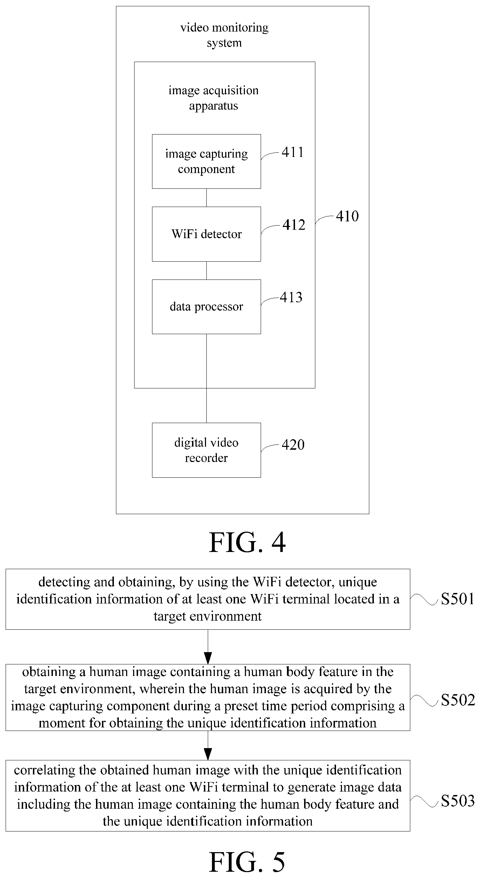

In a fourth aspect, based on the video monitoring method according to the third aspect, the embodiment of the present disclosure provides a video monitoring system. As shown in Fig. 4, the system includes: an image acquisition apparatus 410 and a digital video recorder 420, wherein the image acquisition apparatus 410 includes: an image capturing component 411, a WiFi detector 412 and a data processor 413;
wherein the image capturing component 411 is configured to acquire a human image containing a human body feature in a target environment;
the WiFi detector 412 is configured to detect and obtain unique identification information of at least one WiFi terminal located in the target environment;
the data processor 413 is configured to acquire, by using the image capturing component, a human image containing a human body feature in a target environment; detect and obtain, by using the WiFi detector, unique identification information of at least one WiFi terminal located in the target environment; correlate the human image with the unique identification information of the at least one WiFi terminal to generate image data including the human image containing the human body feature and the unique identification information; and send the generated image data including the human image containing the human body feature and the unique identification information to the digital video recorder 420;
the digital video recorder 420 is configured to receive and store the image data including the human image containing the human body feature and the unique identification information sent by the image acquisition apparatus 410.

Relative to the prior art, the video monitoring system according to the embodiment of the present disclosure, not merely involving acquisition and output of images, can obtain more monitoring data and provide a basis for implementing automatic early warning analysis.

Specifically, the data processor 413 is configured to detect, by using the WiFi detector 412, WiFi signal intensity values of WiFi terminals located in the target environment, and obtain unique identification information of at least one WiFi terminal with a WiFi signal intensity value greater than a predetermined intensity threshold.

Specifically, the data processor 413 is configured to detect, by using the WiFi detector 412, WiFi signal durations of WiFi terminals located in the target environment, and obtain unique identification information of at least one WiFi terminal with a WiFi signal duration greater than a predetermined duration threshold.

In a fifth aspect, an embodiment of the present disclosure provides an image acquisition apparatus to obtain more monitoring data and provide a basis for implementing automatic early warning analysis.

It needs to be appreciated that the image acquisition apparatus according to an embodiment of the present disclosure is applied to a video monitoring system which may further include a Digital Video Recorder (DVR).

The image acquisition apparatus may include: a WiFi detector, an image capturing component and a data processor;
wherein the WiFi detector is configured to detect and obtain unique identification information of at least one WiFi terminal located in a target environment;
the image capturing component is configured to acquire a human image containing a human body feature in the target environment;
the data processor is configured to detect and obtain, by using the WiFi detector, unique identification information of at least one WiFi terminal located in a target environment; obtain a human image containing a human body feature in the target environment, wherein the human image is acquired by the image capturing component during a preset time period comprising a moment for obtaining the unique identification information; correlate the obtained human image with the unique identification information of the at least one WiFi terminal to generate image data including the human image containing the human body feature and the unique identification information.

It needs to be appreciated that the structural schematic diagram of the image acquisition apparatus according to the embodiment of the present disclosure is identical with the structural schematic diagram of the image acquisition apparatus according to the third aspect.

It may be appreciated that in practical application, the image acquisition apparatus may be a camera in which the WiFi detector, the image capturing component and the data processor are integrated; certainly, the image acquisition apparatus may also be a combination apparatus of a camera in which the image capturing component and the data processor are integrated, and the WiFi detector, i.e., the camera and the WiFi detector are arranged separately, which is also reasonable. Furthermore, the WiFi detector may specifically be a WiFi probe in the prior art, wherein the WiFi probe is a current device for detecting the WiFi terminal in the ambient environment, and its basic working principle is as follows: creating a WiFi hotspot and acquiring information of an accessible terminal in the ambient environment, for example, unique identification information, WiFi signal intensity value, WiFi signal duration and the like, wherein it may be understood that the unique identification information of the WiFi terminal may be an MAC (Media Access Control) address, and the specific form of the WiFi detector is not limited to the WiFi probe.

Wherein a procedure of the data processor using the WiFi detector to obtain the unique identification information of the WiFi terminal located in the target environment may be a whole procedure of video monitoring. The WiFi terminal is a terminal equipment having a WiFi component, for example, a smart phone or a tablet computer; the unique identification information may be an MAC (Media Access Control) address; the targent environment may be an environment that calls for video monitoring such as a shopping mall, a park, a residential area, a house or a personal shop; furthermore, the specific technology for implementing the WiFi detector's detection and obtainment of the unique identification information of at least one WiFi terminal located in the target environment is of the prior art and will not be detailed any more here.

Emphatically, to ensure temporal correspondence of the unique identification information of the WiFi terminal and the acquired human image, the data processor may use the image capturing component to acquire a frame of a human image containing a human body feature within a preset time period including the time for obtaining the unique identification information. For example, the preset time period is one minute; if the time for obtaining the unique identification information of the WiFi terminal is 9:00, a frame of a human image containing a human body feature are captured for the target environment in the time period of 9:00-9:01; or the preset time period is two minutes; if the time for obtaining the unique identification information of the WiFi terminal is 9:00, a frame of a human image containing a human body feature are captured for the target environment in the time period of 9:00-9:02. Furthermore, the image capturing component may use capture the human image containing the human body feature in a capturing manner for a movable object in the prior art, wherein the human body feature include but art not limited to a human face. In addition, it is feasible to preset a resolution threshold for use in the stored human image containing the human body feature. When the resolution of the human image containing the human body feature captured by the image capturing component is lower than the resolution threshold, the capturing processing is performed again to ensure the resolution of one finally-obtained frame of a human image containing the human body feature is higher than the resolution threshold.

Furthermore, in an implementation mode, since the intensity of the WiFi signal of the WiFi terminal detected by the WiFi detector varies and usually a suspicious WiFi terminal is a device which approaches or enters the target environment, to improve the monitoring accuracy, the data processor may further be configured to: detect, by using the WiFi detector, WiFi signal intensity values of WiFi terminals located in the target environment, and obtain unique identification information of at least one WiFi terminal with a WiFi signal intensity value greater than a predetermined intensity threshold, wherein the predetermined intensity threshold may be set according to an actual situation or empirical value and is not limited here.

Furthermore, in another specific implementation mode, since the WiFi signal duration of the WiFi terminal detected by the WiFi detector varies, and usually a suspicious WiFi terminal is a device with a longer duration, to improve the monitoring accuracy, the data processor may be further configured to detect, by using the WiFi detector, WiFi signal durations of WiFi terminals located in the target environment, and obtain unique identification information of at least one WiFi terminal with a WiFi signal duration greater than a predetermined duration threshold, wherein the predetermined duration threshold may be set according to an actual situation or empirical value and is not limited here.

Furthermore, in another implementation mode, since what is concerned more by the user is the video monitoring of some suspicious time periods, that is, the monitoring data within some suspicious time periods can provide a better basis for the user's early warning analysis, the method according to the present embodiment may not be executed in the whole procedure of video monitoring, but executed within a suspicious time period, wherein the preset suspicious time period may be set according to an actual situation, for example, 0-4 o'clock or 1-3 o'clock each day, which is reasonable; furthermore, base on the above demand, the data processor 130 may be configured to, during a preset suspicious time period, detect and obtain, by using the WiFi detector, the unique identification information of the at least one WiFi terminal located in the target environment.

Certainly, the above specific manner of defining the WiFi detector's detection and obtainment of the unique identification information of at least one WiFi terminal located in the target environment is only an example and should not constitute a limitation of embodiments of the present disclosure.

Furthermore, the data processor may be further configured to the generated image data including the human image containing the human body feature and the unique identification information to a digital video recorder so that the digital video recorder receives and stores the image data including the human image containing the human body feature and the unique identification information. In practical application, one digital video recorder may correspond to multiple image acquisition apparatuses, i.e., serve as a data server of the multiple image acquisition apparatuses; furthermore, the digital video recorder may, after reception of an image query request sent by the user and carrying the unique identification information, look up to find the human image corresponding to the received unique identification information based on the stored image data, and then feed it back to the user so that the user can perform corresponding early warning analysis processing based on the received human image.

Relative to the prior art merely involving acquisition and output of images, the image acquisition apparatus according to the embodiment of the present disclosure can obtain more monitoring data and provide a basis for implementing automatic early warning analysis.

In a sixth aspect, based on the image acquisition apparatus according to the first aspect, the embodiment of the present disclosure provides a video monitoring system which may include an image acquisition apparatus and a digital video recorder;
wherein the image acquisition apparatus may include: a WiFi detector, an image capturing component and a data processor;
wherein the WiFi detector is configured to detect unique identification information of at least one WiFi terminal located in a target environment;
the image capturing component is configured to acquire a multi-frame image containing a human body feature in the target environment;
the data processor is configured to detect and obtain, by using the WiFi detector, unique identification information of at least one WiFi terminal located in a target environment; obtain a human image containing a human body feature in the target environment, wherein the human image is acquired by the image capturing component during a preset time period comprising a moment for obtaining the unique identification information; correlate the obtained human image with the unique identification information of the at least one WiFi terminal to generate image data including the human image containing the human body feature and the unique identification information; send the generated image data of the human image containing the human body feature and the unique identification information to a digital video recorder;
the digital video recorder is configured to receive and store the image data including the human image containing the human body feature and the unique identification information.

It needs to be appreciated that the video monitoring system according to the embodiment of the present disclosure is identical with the structural schematic view of the video monitoring system according to the above fourth aspect.

In the video monitoring system according to the embodiment of the present disclosure, the data processor in the image acquisition apparatus may detect and obtain, by using the WiFi detector, unique identification information of at least one WiFi terminal located in a target environment; obtain a human image containing a human body feature in the target environment, wherein the human image is acquired by the image capturing component during a preset time period comprising a moment for obtaining the unique identification information; correlate the obtained human image with the unique identification information of the at least one WiFi terminal to generate image data including the human image containing the human body feature and the unique identification information; send the generated image data of the human image containing the human body feature and the unique identification information to a digital video recorder for storing. Relative to the prior art only involving acquisition and output of images, the video monitoring system according to the embodiment of the present disclosure can obtain more monitoring data and provide a basis for implementing automatic early warning analysis.

In an implementation mode, the data processor is specifically configured to detect, by using the WiFi detector, WiFi signal intensity values of WiFi terminals located in the target environment, and obtain unique identification information of at least one WiFi terminal with a WiFi signal intensity value greater than a predetermined intensity threshold.

In a second implementation mode, the data processor is specifically configured to detect, by using the WiFi detector, WiFi signal durations of WiFi terminals located in the target environment, and obtain unique identification information of at least one WiFi terminal with a WiFi signal duration greater than a predetermined duration threshold.

In a third implementation mode, the data processor is specifically configured to, during a preset suspicious time period, detect and obtain, by using the WiFi detector, the unique identification information of the at least one WiFi terminal located in the target environment.

In a seventh aspect, based on the image acquisition apparatus according to the fifth aspect, an embodiment of the present disclosure provides a video monitoring method to obtain more monitoring data and provide a basis for automatic early warning analysis.

It needs to be appreciated that a video monitoring method according to the embodiment of the present disclosure is applied to an image acquisition apparatus in a video monitoring system. The image acquisition apparatus is provided with a WiFi detector and an image capturing component, wherein the WiFi detector can detect unique identification information of WiFi terminals located in a target environment, the image capturing component can acquire a human image containing a human body feature in the target environment, and the video monitoring system may further include a Digital Video Recorder (DVR).

It may be appreciated that in practical application, the image acquisition apparatus may be a camera in which at least the WiFi detector and the image capturing component are integrated; certainly, the image acquisition apparatus may also be a combination apparatus of a camera in which at least the image capturing component is integrated, and the WiFi detector, i.e., the camera and the WiFi detector are arranged separately, which is also reasonable. Furthermore, the WiFi detector may specifically be a WiFi probe in the prior art, wherein the WiFi probe is a current device for detecting the WiFi terminal in the ambient environment, and its basic working principle is as follows: creating a WiFi hotspot and acquiring information of an accessible terminal in the ambient environment, for example, unique identification information, WiFi signal intensity value, WiFi signal duration and the like, wherein it may be understood that the unique identification information of the WiFi terminal may be an MAC (Media Access Control) address, and the specific form of the WiFi detector is not limited to the WiFi probe.

As shown in Fig. 5, the video monitoring method may include the following steps:
S501: detecting and obtaining, by using the WiFi detector, unique identification information of at least one WiFi terminal located in a target environment;
wherein the targent environment may be an environment that calls for video monitoring such as a shopping mall, a park, a residential area, a house or a personal shop.

In a full procedure of video monitoring, the image acquisition apparatus may use the WiFi detector to obtain the unique identification information of at least one WiFi terminal located in the target environment, wherein the unique identification information may be an MAC address. The specific technology for implementing the WiFi detector's detection and obtainment of the unique identification information of at least one WiFi terminal located in the target environment is of the prior art and will not be detailed any more here.

It needs to be appreciated that in one implementation mode, since the intensity of the WiFi signal of the WiFi terminal detected by the WiFi detector varies and usually a suspicious WiFi terminal is a device which approaches or enters the target environment, to improve the monitoring accuracy, detecting and obtaining, by using the WiFi detector, unique identification information of at least one WiFi terminal located in the target environment may further include:
detecting, by using the WiFi detector, a WiFi signal intensity value of at least one WiFi terminal located in the target environment, and
obtaining unique identification information of at least one WiFi terminal with a WiFi signal intensity value greater than a predetermined intensity threshold.

Wherein the predetermined intensity threshold may be set according to an actual situation or empirical value and is not limited here.

In another specific implementation mode, since the WiFi signal duration of the WiFi terminal detected by the WiFi detector varies, and usually a suspicious WiFi terminal is a device with a longer duration, to improve the monitoring accuracy, detecting and obtaining, by using the WiFi detector, unique identification information of at least one WiFi terminal located in the target environment may further include:
detecting, by using the WiFi detector, WiFi signal durations of WiFi terminals located in the target environment, and
obtaining unique identification information of at least one WiFi terminal with a WiFi signal duration greater than a predetermined duration threshold.

Wherein the predetermined duration threshold may be set according to an actual situation or empirical value and is not limited here.

In another implementation mode, since what is concerned more by the user is the video monitoring of some suspicious time periods, that is, the monitoring data within some suspicious time periods can provide a better basis for the user's early warning analysis, the method according to the present embodiment may not be executed in the whole procedure of video monitoring, but executed within a suspicious time period, wherein the preset suspicious time period may be set according to an actual situation, for example, 0-4 o'clock or 1-3 o'clock each day, which is reasonable; furthermore, base on the above demand, detecting and obtaining, by using the WiFi detector, unique identification information of at least one WiFi terminal located in the target environment may include: during a preset suspicious time period, detecting and obtaining, by using the WiFi detector, the unique identification information of the at least one WiFi terminal located in the target environment.

Certainly, the above specific manner of defining the WiFi detector's detection and obtainment of the unique identification information of at least one WiFi terminal located in the target environment is only an example and should not constitute a limitation of embodiments of the present disclosure.

S502: obtaining a human image containing a human body feature in the target environment, wherein the human image is acquired by the image capturing component during a preset time period comprising a moment for obtaining the unique identification information.

It is possible to, after using the WiFi detector to detect and obtain unique identification information of at least one WiFi terminal located in the target environment, obtain the human image containing a human body feature in the target environment, wherein the human image is acquired by the image capturing component in a preset time period including the time for obtaining the unique identification information.

It may be appreciated that to ensure temporal correspondence of the unique identification information of the WiFi terminal and the acquired human image, the data processor may use the image capturing component to acquire a frame of a human image containing a human body feature within a preset time period including the time for obtaining the unique identification information. For example, the preset time period is one minute; if the time for obtaining the unique identification information of the WiFi terminal is 9:00, a frame of a human image containing a human body feature are captured for the target environment in the time period of 9:00-9:01; or the preset time period is two minutes; if the time for obtaining the unique identification information of the WiFi terminal is 9:00, a frame of a human image containing a human body feature are captured for the target environment in the time period of 9:00-9:02. Furthermore, the image capturing component may use capture the human image containing the human body feature in a capturing manner for a movable object in the prior art, wherein the human body feature include but art not limited to a human face. In addition, it is feasible to preset a resolution threshold for use in the stored human image containing the human body feature. When the resolution of the human image containing the human body feature captured by the image capturing component is lower than the resolution threshold, the capturing processing is performed again to ensure the resolution of one finally-obtained frame of a human image containing the human body feature is higher than the resolution threshold.

S503: correlating the obtained human image with the unique identification information of the at least one WiFi terminal to generate image data including the human image containing the human body feature and the unique identification information.

It is possible to, after obtaining the human image containing the human body feature in the target environment, correlate the obtained human image with the unique identification information of the at least one WiFi terminal to generate image data including the human image containing the human body feature and the unique identification information, wherein the image data of the human image containing the human body feature and the unique identification information may be used for subsequent early warning analysis.

Furthermore, the image acquisition apparatus may send the generated image data including the human image containing the human body feature and the unique identification information to a digital video recorder so that the digital video recorder receives and stores the image data including the human image containing the human body feature and the unique identification information. In practical application, one digital video recorder may correspond to multiple image acquisition apparatuses, i.e., serve as a data server of the multiple image acquisition apparatuses; furthermore, the digital video recorder may, after reception of an image query request sent by the user and carrying the unique identification information, look up to find the human image corresponding to the received unique identification information based on the stored image data, and then feed it back to the user so that the user can perform corresponding early warning analysis processing based on the received human image.

In the video monitoring method according to the embodiment of the present disclosure, the image acquisition apparatus may detect and obtain, by using the WiFi detector, unique identification information of at least one WiFi terminal located in a target environment; obtain a human image containing a human body feature in the target environment, wherein the human image is acquired by the image capturing component during a preset time period comprising a moment for obtaining the unique identification information; and correlate the obtained human image with the unique identification information of the at least one WiFi terminal to generate image data including the human image containing the human body feature and the unique identification information. Relative to the prior art only involving acquisition and output of images, the video monitoring method according to the embodiment of the present disclosure can obtain more monitoring data and provide a basis for implementing automatic early warning analysis.

In an eighth aspect, an embodiment of the present disclosure provides a monitoring early warning method, which obtains more monitoring data, provides a basis for implementing automatic early warning analysis, and implements early warning processing based on the obtained monitoring data.

It needs to be appreciated that the apparatus used in the monitoring early warning method according to the embodiment of the present disclosure may include: an image acquisition apparatus, a digital video recorder and an early warning signal output device.

Specifically, the image acquisition apparatus is provided with a WiFi detector and an image capturing component, wherein the WiFi detector can detect unique identification information of WiFi terminals located in a target environment, the image capturing component can acquire a multi-frame human image containing a human body feature in the target environment. In practical application, the image acquisition apparatus may be a camera in which at least the WiFi detector and the image capturing component are integrated; certainly, the image acquisition apparatus may also be a combination apparatus of a camera in which at least the image capturing component is integrated, and the WiFi detector, i.e., the camera and the WiFi detector are arranged separately, which is also reasonable. Furthermore, the WiFi detector may specifically be a WiFi probe in the prior art, wherein the WiFi probe is a current device for detecting the WiFi terminal in the ambient environment, and its basic working principle is as follows: creating a WiFi hotspot and acquiring information of an accessible terminal in the ambient environment, for example, unique identification information, WiFi signal intensity value, WiFi signal duration and the like, wherein it may be understood that the unique identification information of the WiFi terminal may be an MAC (Media Access Control) address, and the specific form of the WiFi detector is not limited to the WiFi probe.

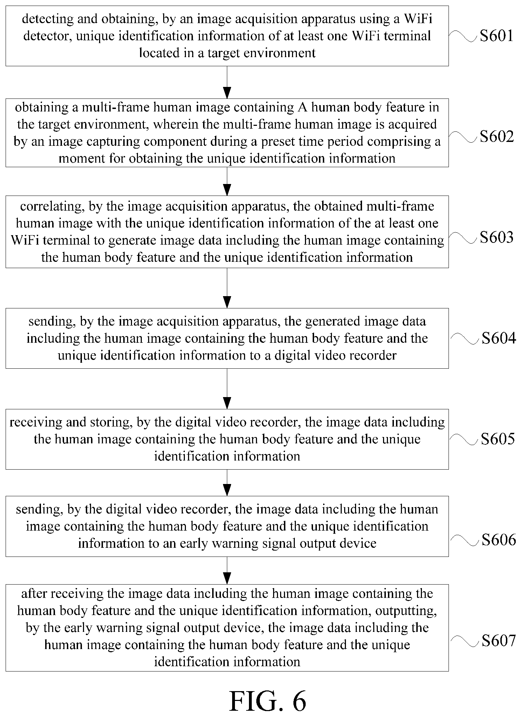

As shown in Fig. 6, the monitoring early warning method may include the following steps:
S601: detecting and obtaining, by an image acquisition apparatus using a WiFi detector, unique identification information of at least one WiFi terminal located in a target environment;
wherein the targent environment may be an environment that calls for video monitoring such as a shopping mall, a park, a residential area, a house or a personal shop.

In a full procedure of video monitoring, the image acquisition apparatus may use the WiFi detector to obtain the unique identification information of at least one WiFi terminal located in the target environment, wherein the unique identification information may be an MAC address. The specific technology for implementing the WiFi detector's detection and obtainment of the unique identification information of at least one WiFi terminal located in the target environment is of the prior art and will not be detailed any more here.

It needs to be appreciated that in one implementation mode, since the intensity of the WiFi signal of the WiFi terminal detected by the WiFi detector varies and usually a suspicious WiFi terminal is a device which approaches or enters the target environment, to improve the monitoring accuracy, detecting and obtaining, by using the WiFi detector, unique identification information of at least one WiFi terminal located in the target environment may include:
detecting, by using the WiFi detector, WiFi signal intensity values of WiFi terminals located in the target environment, and
obtaining unique identification information of at least one WiFi terminal with a WiFi signal intensity value greater than a predetermined intensity threshold.

Wherein the predetermined intensity threshold may be set according to an actual situation or empirical value and is not limited here.

In another specific implementation mode, since the WiFi signal duration of the WiFi terminal detected by the WiFi detector varies, and usually a suspicious WiFi terminal is a device with a longer duration, to improve the monitoring accuracy, detecting and obtaining, by using the WiFi detector, unique identification information of at least one WiFi terminal located in the target environment may include:
detecting, by using the WiFi detector, WiFi signal durations of WiFi terminals located in the target environment, and
obtaining unique identification information of at least one WiFi terminal with a WiFi signal duration greater than a predetermined duration threshold.

Wherein the predetermined duration threshold may be set according to an actual situation or empirical value and is not limited here.

In another implementation mode, since what is concerned more by the user is the video monitoring of some suspicious time periods, that is, the monitoring data within some suspicious time periods can provide a better basis for the user's early warning analysis, the method according to the present embodiment may not be executed in the whole procedure of video monitoring, but executed within a suspicious time period, wherein the preset suspicious time period may be set according to an actual situation, for example, 0-4 o'clock or 1-3 o'clock each day, which is reasonable; furthermore, base on the above demand, detecting, by using the WiFi detector, WiFi signal durations of WiFi terminals located in the target environment, and obtaining unique identification information of at least one WiFi terminal with a WiFi signal duration greater than a predetermined duration threshold may include: during a preset suspicious time period, detecting and obtaining, by using the WiFi detector, the unique identification information of the at least one WiFi terminal located in the target environment.

Certainly, the above specific manner of defining the WiFi detector's detection and obtainment of the unique identification information of at least one WiFi terminal located in the target environment is only an example and should not constitute a limitation of embodiments of the present disclosure.

S602: obtaining a multi-frame human image containing a human body feature in the target environment, wherein the multi-frame human image is acquired by an image capturing component during a preset time period comprising a moment for obtaining the unique identification information.

After detecting and obtaining, by using the WiFi detector, unique identification information of at least one WiFi terminal located in a target environment, the image acquisition apparatus may further obtain a multi-frame human image containing a human body feature in the target environment, wherein the multi-frame human image is acquired by an image capturing component during a preset time period comprising a moment for obtaining the unique identification information.

It may be appreciated that to ensure temporal correspondence of the unique identification information of the WiFi terminal and the human image subsequently acquired by the image acquisition apparatus, the image acquisition apparatus may use the image capturing component to acquire a multi-frame human image containing a human body feature during a preset time period comprising a moment for obtaining the unique identification information. That is to say, after the unique identification information is obtained, the human image containing the human body feature are captured for the target environment through the image capturing component. A capturing frequency may be set on one's will. However, the target environment needs to be captured within the preset time period. For example, the preset time period is one minute; if the time for obtaining the unique identification information of the WiFi terminal is 9:00, the target environment is captured according to the preset capturing frequency within the time period of 9:00-9:01; or the preset time period is two minutes; if the time for obtaining the unique identification information of the WiFi terminal is 9:00, the target environment is captured according to the preset capturing frequency within the time period of 9:00-9:02. The multi-frame human image in the present embodiment may also be understood as a video file formed by the multi-frame human image.

Furthermore, the image capturing component may use capture the multi-frame image containing the human body feature in a capturing manner for a movable object in the prior art, wherein the human body feature include but art not limited to a human face.

In addition, it is feasible to preset a resolution threshold for use in the stored human image containing the human body feature. When the resolution of the human image containing the human body feature captured by the image capturing component is lower than the resolution threshold, the capturing processing is performed again to ensure the resolution of one finally-obtained multi-frame human image containing the human body feature is higher than the resolution threshold.

S603: correlating, by the image acquisition apparatus, the obtained multi-frame human image with the unique identification information of the at least one WiFi terminal to generate image data including the human image containing the human body feature and the unique identification information.

After obtaining the multi-frame human image containing the human body feature in the target environment, the image acquisition apparatus may correlate the obtained multi-frame human image with the unique identification information of the at least one WiFi terminal to generate image data including the human image containing the human body feature and the unique identification information, wherein the image data of the human image containing the human body feature and the unique identification information may be used for subsequent early warning analysis. If the multi-frame human image in the present embodiment may also be understood as a video file formed by the multi-frame human image, the correlating the multi-frame human image with the unique identification information of the at least one WiFi terminal may be understood as binding the video file formed by the multi-frame human image with at least one unique identification information.

Furthermore, since multiple persons located closer all might carry the WiFi terminal, and the image capturing component might capture the multiple persons in a one-frame image, to ensure effectiveness of the correspondence relationship, the image acquisition apparatus, upon creating the correspondence, may correlate each frame of human image in the obtained multi-frame human image respectively with the unique identification information of at least one WiFi terminal, namely, each frame of human image correspond to the obtained unique identification information of all WiFi terminals. Certainly, upon creating the correspondence, the image acquisition apparatus may correlate each unique identification information in at least one unique identification information with all human images respectively, which is also reasonable.

S604: sending, by the image acquisition apparatus, the generated image data including the human image containing the human body feature and the unique identification information to a digital video recorder.

After generating the image data, the image acquisition apparatus may sends the generated image data including the human image containing the human body feature and the unique identification information to a digital video recorder.

S605: receiving and storing, by the digital video recorder, the image data including the human image containing the human body feature and the unique identification information.

S606: sending, by the digital video recorder, the image data including the human image containing the human body feature and the unique identification information to an early warning signal output device.

Wherein, after the image acquisition apparatus sends the image data including the human image containing the human body feature and the unique identification information to an early warning signal output device, the digital video recorder may receive and store the image data including the human image containing the human body feature and the unique identification information, and to implement the early warning analysis, the digital video recorder may send the image data including the human image containing the human body feature and the unique identification information to the early warning signal output device.

In practical application, one digital video recorder may correspond to multiple image acquisition apparatuses, i.e., serve as a data server of the multiple image acquisition apparatuses; furthermore, the digital video recorder may, after reception of an image query request sent by the user and carrying the unique identification information, look up to find the human image corresponding to the received unique identification information based on the stored image data, and then feed it back to the user so that the user can perform corresponding early warning analysis processing based on the received human image.

S607: after receiving the image data including the human image containing the human body feature and the unique identification information, outputting, by the early warning signal output device, the image data including the human image containing the human body feature and the unique identification information.

Wherein it may be appreciated that the early warning signal output device may be a terminal equipment or server. Specifically, in practical application, as for a large-sized public site such as a shopping mall, a residential area or a park, the early warning signal output device may be a server corresponding to the public site. Certainly, the early warning signal output device may also be a hand-held terminal held by a patrolman, which is reasonable. As for a small private site such as a house or small private shop, the early warning signal output device may be a terminal equipment of the owner of the site, for example, a smart phone or a notable computer. Certainly, the digital video recorder may serve as an early warning signal output device, whereupon the digital video recorder may directly perform output processing after receiving the image data.

In the monitoring early warning method according to the embodiment of the present disclosure, the image acquisition apparatus may detect and obtain, by using a WiFi detector, unique identification information of at least one WiFi terminal located in a target environment; obtain a multi-frame human image containing a human body feature in the target environment, wherein the multi-frame human image is acquired by an image capturing component during a preset time period comprising a moment for obtaining the unique identification information; correlate the obtained multi-frame human image with the unique identification information of the at least one WiFi terminal to generate image data including the human image containing the human body feature and the unique identification information; send the generated image data including the human image containing the human body feature and the unique identification information to a digital video recorder for storage; and the digital video recorder sends the image data to the early warning signal output device for output and display. Relative to the prior art only involving acquisition and output of images, the monitoring early warning method according to the embodiment of the present disclosure can obtain more monitoring data and provide a basis for implementing automatic early warning analysis; and implement early warning processing based on the obtained monitoring data.

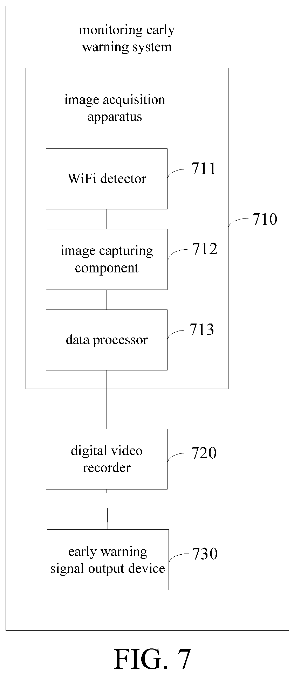

In a ninth aspect, based on the monitoring early warning method according to the above eighth aspect, an embodiment of the present disclosure further provides a monitoring early warning system. As shown in Fig. 7, the monitoring early warning system may include: an image acquisition apparatus 710, a digital video recorder 720 and an early warning signal output device 730;
wherein the image acquisition apparatus 710 includes: a WiFi detector 711, an image capturing component 712, and a data processor 713;
wherein the WiFi detector 711 is configured to detect unique identification information of at least one WiFi terminal located in a target environment;
the image capturing component 712 is configured to acquire a multi-frame image containing a human body feature in the target environment;
the data processor 713 is configured to detect and obtain, by using the WiFi detector 711, unique identification information of at least one WiFi terminal located in a target environment; obtain a multi-frame human image containing a human body feature in the target environment, wherein the multi-frame human image is acquired by the image capturing component 712 during a preset time period comprising a moment for obtaining the unique identification information; correlate the obtained multi-frame human image with the unique identification information of the at least one WiFi terminal to generate image data including the human image containing the human body feature and the unique identification information; send the generated image data of the human image containing the human body feature and the unique identification information to a digital video recorder 720;
the digital video recorder 720 is configured to receive and store the image data including the human image containing the human body feature and the unique identification information; send the image data including the human image containing the human body feature and the unique identification information to an early warning signal output device 730;

The early warning signal output device 730 is configured to, after receiving the image data including the human image containing the human body feature and the unique identification information, output the image data including the human image containing the human body feature and the unique identification information.

In the monitoring early warning system according to the embodiment of the present disclosure, the image acquisition apparatus may detect and obtain, by using the WiFi detector, unique identification information of at least one WiFi terminal located in a target environment; obtain a multi-frame human image containing a human body feature in the target environment, wherein the multi-frame human image is acquired by the image capturing component during a preset time period comprising a moment for obtaining the unique identification information; correlate the obtained multi-frame human image with the unique identification information of the at least one WiFi terminal to generate image data including the human image containing the human body feature and the unique identification information; send the generated image data of the human image containing the human body feature and the unique identification information to a digital video recorder for storage; and the digital video recorder may send the image data to the early warning signal output device for output and display. Relative to the prior art only involving acquisition and output of images, the monitoring early warning system according to the embodiment of the present disclosure can obtain more monitoring data and provide a basis for implementing automatic early warning analysis; and implement early warning processing based on the obtained monitoring data.

The multi-frame human image in the present embodiment may also be understood as a video file formed by the multi-frame human image.

The correlating the obtained multi-frame human image with the unique identification information of the at least one WiFi terminal may be understood as binding the video file formed by the multi-frame human image with at least one unique identification information.

In a first implementation mode, the data processor 713 is specifically configured to detect, by using the WiFi detector, WiFi signal intensity values of WiFi terminals located in the target environment, and obtain unique identification information of at least one WiFi terminal with a WiFi signal intensity value greater than a predetermined intensity threshold.

In a second implementation mode, the data processor 713 is specifically configured to detect, by using the WiFi detector, WiFi signal durations of WiFi terminals located in the target environment, and obtain unique identification information of at least one WiFi terminal with a WiFi signal duration greater than a predetermined duration threshold.

In a third implementation mode, the data processor 713 is specifically configured to, during a preset suspicious time period, detect and obtain, by using the WiFi detector, the unique identification information of the at least one WiFi terminal located in the target environment.

In a tenth aspect, an embodiment of the present disclosure provides a video monitoring method to obtain more monitoring data and provide a basis for automatic early warning analysis.

It needs to be appreciated that the video monitoring method according to the embodiment of the present disclosure is applied to a digital video recorder in a video monitoring system which includes a WiFi detector and an image acquisition apparatus for acquiring images in a target environment.

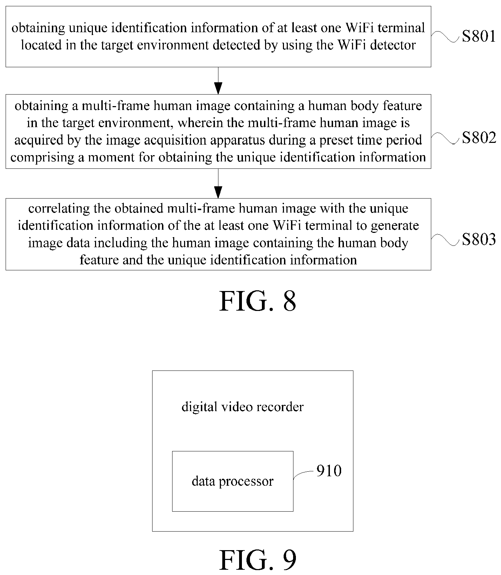

As shown in Fig. 8, the video monitoring method may include the following steps:
S801: obtaining unique identification information of at least one WiFi terminal located in the target environment detected by using the WiFi detector;
wherein the targent environment may be an environment that calls for video monitoring such as a shopping mall, a park, a residential area, a house or a personal shop.

In a full procedure of video monitoring, the digital video recorder may obtain unique identification information of at least one WiFi terminal located in the target environment detected by using the WiFi detector, wherein the unique identification information may be an MAC (Media Access Control) address.

In addition, it needs to be appreciated that in one implementation mode, since the intensity of the WiFi signal of the WiFi terminal detected by the WiFi detector varies and usually a suspicious WiFi terminal is a device which approaches or enters the target environment, to improve the monitoring accuracy, the obtained unique identification information of the WiFi terminal is the unique identification information of a WiFi terminal with a WiFi signal intensity value greater than a predetermined intensity threshold, wherein the predetermined intensity threshold may be set according to an actual situation or empirical value and is not limited here.

In another specific implementation mode, since the WiFi signal duration of the WiFi terminal detected by the WiFi detector varies, and usually a suspicious WiFi terminal is a device with a longer duration, to improve the monitoring accuracy, the obtained unique identification information of the WiFi terminal is the unique identification information of a WiFi terminal with a WiFi signal duration greater than a predetermined duration threshold, wherein the predetermined duration threshold may be set according to an actual situation or empirical value and is not limited here.

In another implementation mode, since what is concerned more by the user is the video monitoring of some suspicious time periods, that is, the monitoring data within some suspicious time periods can provide a better basis for the user's early warning analysis, the method according to the present embodiment may not be executed in the whole procedure of video monitoring, but executed within a suspicious time period, wherein the preset suspicious time period may be set according to an actual situation, for example, 0-4 o'clock or 1-3 o'clock each day, which is reasonable; furthermore, base on the above demand, the obtained unique identification information of the WiFi detector is the unique identification information of the WiFi terminal located in the target environment obtained by the WiFi detector during a preset suspicious time period.

Those skilled in the art may understand that in a first implementation mode, the WiFi detector may be disposed in the digital video recorder, whereupon the obtaining the unique identification information of the at least one WiFi terminal located in the target environment by detecting using the WiFi detector may include: the unique identification information of the at least one WiFi terminal located in the target environment detected by the digital video recorder by using the WiFi detector, wherein the WiFi detector may specifically be a WiFi probe in the prior art, wherein the WiFi probe is a current device for detecting the WiFi terminal in the ambient environment, and its basic working principle is as follows: creating a WiFi hotspot and acquiring information of an accessible terminal in the ambient environment, for example, unique identification information, WiFi signal intensity value, WiFi signal duration and the like.

In a second implementation mode, the WiFi detector may be disposed in the image acquisition apparatus, and the obtaining the unique identification information of the at least one WiFi terminal located in the target environment by detecting using the WiFi detector may include: receiving the image acquisition apparatus-reported unique identification information of the at least one WiFi terminal located in the target environment, wherein the unique identification information of the WiFi terminal is the unique identification information of the at least one WiFi terminal located in the target environment obtained by the image acquisition apparatus by using the WiFi detector. In a second implementation mode, the image acquisition apparatus may be a camera in which at least the image capturing component and the WiFi detector are integrated.

Certainly, the WiFi detector may be independent from the digital video recorder and the image acquisition apparatus, but the digital video recorder may control the WiFi detector to detect and obtain the unique identification information of at least one WiFi terminal located in the target environment.

S802: obtaining a multi-frame human image containing a human body feature in the target environment, wherein the multi-frame human image is acquired by the image acquisition apparatus during a preset time period comprising a moment for obtaining the unique identification information.

It may be appreciated that no matter whether the WiFi detector is disposed in the digital video recorder or the image acquisition apparatus, the obtaining the multi-frame human image containing a human body feature in the target environment may include: receiving the multi-frame human image containing a human body feature in the target environment reported by the image acquisition apparatus, and the multi-frame human image is acquired by the image acquisition apparatus during a preset time period including the time for obtaining the unique identification information. Specifically, regarding the case that the WiFi detector is disposed in the digital video recorder, the image acquisition apparatus, after detecting the human body feature, may capture and report on its own, and what is subseqently used by the digital video recorder is images acquired in a preset time period including the time for obtaining the unique identification information; regarding the case in which the WiFi detector is disposed in the image acquisition apparatus, the image acquisition apparatus may, after using the WiFi detector to detect and obtain the unique identification information of the WiFi terminal located in the target environment detected and obtained by using the WiFi detector, capture a human image containing a human body feature for the target environment, and report them to the digital video recorder.

The multi-frame human image in the present embodiment may also be understood as a video file formed by the multi-frame human image.

Likewise, no matter whether the WiFi detector is disposed in the digital video recorder or the image acquisition apparatus, the obtaining the multi-frame human image containing a human body feature in the target environment may include: controlling the image acquisition apparatus to acquire the multi-frame human image containing a human body feature in the target environment.

Furthermore, regarding the case in which the WiFi detector is located in the digital video recorder, since the target environment may include multiple image acquisition apparatuses, to improve the capturing accuracy, it is feasible to enable the image acquisition apparatus closer to the WiFi terminal to capture images or the image acquisition apparatus whose monitoring region includes a region where the WiFi terminal lies to capture images of a person holding the WiFi terminal. Therefore, obtaining a multi-frame human image containing the human body feature in the targent environment may include:
determining a first position relationship of the WiFi terminal relative to the WiFi detector;
determining a first image acquisition apparatus for acquiring a multi-frame human image containing human body feature, according to the first position relationship and a preset second position relationship between the WiFi detector and the image acquisition apparatus; and
obtaining the multi-frame human image containing human body feature acquired by the first image acquisition apparatus.

Wherein the first position relationship and the second position relationship may include: a distance relationship and a direction relationship, wherein the first position relationship of the WiFi terminal relative to the WiFi detector may be determined through the detected WiFi signal of the WiFi terminal.

S803: correlating the obtained multi-frame human image with the unique identification information of the at least one WiFi terminal to generate image data including the human image containing the human body feature and the unique identification information.

It is possible to, after obtaining the multi-frame human image containing a human body feature in the target environment, correlate the obtained multi-frame human image with the unique identification information of the at least one WiFi terminal to generate image data including the human image containing the human body feature and the unique identification information, wherein the image data of a human image containing the human body feature and the unique identification information may be used for subsequent early warning analysis.

The correlating the multi-frame human image with the unique identification information of the at least one WiFi terminal may be understood as binding the video file formed by the multi-frame human image with at least one unique identification information.

Furthermore, since multiple persons located closer might carry a WiFi terminal and the image capturing component might capture the multiple persons in a one-frame picture, to ensure effectiveness of the correspondence relationship, the image acquisition apparatus, upon creating the correspondence, may correlate each frame of human image in the obtained multi-frame human image respectively with the unique identification information of at least one WiFi terminal, namely, each frame of human image correspond to the obtained unique identification information of all obtained WiFi terminals. Certainly, upon creating the correspondence, the image acquisition apparatus may correlate each unique identification information in at least one unique identification information with all human images respectively, which is also reasonable.

In practical application, one digital video recorder may correspond to multiple image acquisition apparatuses, i.e., serve as a data server of the multiple image acquisition apparatuses; furthermore, the digital video recorder, based on the stored image data, look up to find the human image corresponding to the received unique identification information, and then feeds it back to the user so that the user can perform corresponding early warning analysis processing based on the received human image.

In the video monitoring method according to the embodiment of the present disclosure, the digital video recorder may obtain unique identification information of at least one WiFi terminal located in the target environment detected by using the WiFi detector; obtaining a multi-frame human image containing a human body feature in the target environment, wherein the multi-frame human image is acquired by the image acquisition apparatus during a preset time period comprising a moment for obtaining the unique identification information; and correlate the obtained multi-frame human image with the unique identification information of the at least one WiFi terminal to generate image data including the human image containing the human body feature and the unique identification information. Relative to the prior art only involving acquisition and output of images, the video monitoring method according to the solution can obtain more monitoring data and provide a basis for implementing automatic early warning analysis.

In the eleventh aspect, based on the video monitoring method according to the above tenth aspect, an embodiment of the present disclosure provides a digital video recorder applied to a video monitoring system, wherein the video monitoring system may further include: a WiFi detector and an image acquisition apparatus for performing image acquisition for the target environment; the digital video recorder may include:
a data processor 910 configured to obtain unique identification information of at least one WiFi terminal located in the target environment detected by using the WiFi detector; obtain a multi-frame human image containing a human body feature in the target environment, wherein the multi-frame human image is acquired by the image acquisition apparatus during a preset time period comprising a moment for obtaining the unique identification information; correlate the obtained multi-frame human image with the unique identification information of the at least one WiFi terminal to generate image data including the human image containing the human body feature and the unique identification information.

The digital video recorder according to the embodiment of the present disclosure may obtain unique identification information of at least one WiFi terminal located in the target environment detected by using the WiFi detector; obtain a multi-frame human image containing a human body feature in the target environment, wherein the multi-frame human image is acquired by the image acquisition apparatus during a preset time period comprising a moment for obtaining the unique identification information; correlate the obtained multi-frame human image with the unique identification information of the at least one WiFi terminal to generate image data including the human image containing the human body feature and the unique identification information. Relative to the prior art only involving acquisition and output of images, the digital video recorder according to the present solution can obtain more monitoring data and provide a basis for implementing automatic early warning analysis.

Specifically, the WiFi detector is disposed in the digital video recorder, and the digital video recorder may detect and obtain, by using the WiFi detector, the unique identification information of the at least one WiFi terminal located in the target environment.

Specifically, the WiFi detector is disposed in the image acquisition apparatus, and the digital video recorder may receive the unique identification information of the at least one WiFi terminal located in the target environment reported by the image acquisition apparatus, wherein the unique identification information of the WiFi terminal is the unique identification information of the at least one WiFi terminal located in the target environment detected and obtained by the image acquisition apparatus using the WiFi detector.

In a twelfth aspect, an embodiment of the present disclosure provides a storage medium for storing an application program. The application program is configured to, when being executed, carry out the image acquring method according to the first aspect of embodiments of the present disclosure; wherein the image acquisition method according to the first aspect of embodiments of the present disclosure is applied to an image acquisition apparatus in a video monitoring system, wherein the image acquisition apparatus is provided with a WiFi detector and an image capturing component; the method includes:
acquiring, by using the image capturing component, a human image containing a human body feature in a target environment;
detecting and obtaining, by using the WiFi detector, unique identification information of at least one WiFi terminal located in the target environment; and
correlating the human image with the unique identification information of the at least one WiFi terminal to generate image data including the human image containing the human body feature and the unique identification information.

In a thirteenth aspect, an embodiment of the present disclosure provides a storage medium for storing an application program. The application program is configured to, when being executed, carry out the video monitoring method according to the second aspect of embodiments of the present disclosure; wherein the video monitoring method according to the second aspect of embodiments of the present disclosure is applied to a video monitoring system, wherein the video monitoring system includes an image acquisition apparatus and a digital video recorder, wherein the image acquisition apparatus is provided with a WiFi detector and an image capturing component; the method includes:
acquiring, by the image acquisition apparatus using the image capturing component, a human image containing a human body feature in a target environment; detecting and obtaining, by the image acquisition apparatus using the WiFi detector, unique identification information of at least one WiFi terminal located in the target environment; correlating the human image with the unique identification information of the at least one WiFi terminal to generate image data including the human image containing the human body feature and the unique identification information; and sending the generated image data including the human image containing the human body feature and the unique identification information to the digital video recorder; and
receiving and storing, by the digital video recorder, the image data including the human image containing the human body feature and the unique identification information sent by the image acquisition apparatus.

In a fourteenth aspect, an embodiment of the present disclosure provides a storage medium for storing an application program. The application program is configured to, when being executed, carry out the video monitoring method according to the seventh aspect of embodiments of the present disclosure; wherein the video monitoring method according to the seventh aspect of embodiments of the present disclosure is applied to an image acquisition apparatus in a video monitoring system, wherein the image acquisition apparatus is provided with a WiFi detector and an image capturing component; the method includes:
detecting and obtaining, by using the WiFi detector, unique identification information of at least one WiFi terminal located in a target environment;
obtaining a human image containing a human body feature in the target environment, wherein the human image is acquired by the image capturing component during a preset time period comprising a moment for obtaining the unique identification information; and
correlating the obtained human image with the unique identification information of the at least one WiFi terminal to generate image data including the human image containing the human body feature and the unique identification information.

In a fifteenth aspect, an embodiment of the present disclosure provides a storage medium for storing an application program. The application program is configured to, when being executed, carry out a monitoring early warning method according to the eighth aspect of embodiments of the present disclosure; wherein the monitoring early warning method according to the eighth aspect of embodiments of the present disclosure includes:
detecting and obtaining, by an image acquisition apparatus using a WiFi detector, unique identification information of at least one WiFi terminal located in a target environment; obtaining a multi-frame human image containing a human body feature in the target environment, wherein the multi-frame human image is acquired by an image capturing component during a preset time period comprising a moment for obtaining the unique identification information; correlating the obtained multi-frame human image with the unique identification information of the at least one WiFi terminal to generate image data including the human image containing the human body feature and the unique identification information; sending the generated image data including the human image containing the human body feature and the unique identification information to a digital video recorder;
receiving and storing, by the digital video recorder, the image data including the human image containing the human body feature and the unique identification information; sending the image data including the human image containing the human body feature and the unique identification information to an early warning signal output device; and
after receiving the image data including the human image containing the human body feature and the unique identification information, outputting, by the early warning signal output device, the image data including the human image containing the human body feature and the unique identification information.

In a sixteenth aspect, an embodiment of the present disclosure provides a storage medium for storing an application program. The application program is configured to, when being executed, carry out a video monitoring method according to the tenth aspect of embodiments of the present disclosure; wherein the video monitoring method according to the tenth aspect of embodiments of the present disclosure is applied to a digital video recorder in a video monitoring system, wherein the video monitoring system further includes: a WiFi detector and an image acquisition apparatus for performing image acquisition for a target environment; the method includes:
obtaining unique identification information of at least one WiFi terminal located in the target environment detected by using the WiFi detector;
obtaining a multi-frame human image containing a human body feature in the target environment, wherein the multi-frame human image is acquired by the image acquisition apparatus during a preset time period comprising a moment for obtaining the unique identification information; and
correlating the obtained multi-frame human image with the unique identification information of the at least one WiFi terminal to generate image data including the human image containing the human body feature and the unique identification information.

In a seventeenth aspect, an embodiment of the present disclosure provides an application program, which is configured to, when being executed, carry out an image acquisition method according to the first aspect of embodiments of the present disclosure; the image acquisition method according to the first aspect of embodiments of the present disclosure is applied to an image acquisition apparatus in a video monitoring system, wherein the image acquisition apparatus is provided with a WiFi detector and an image capturing component; the method includes:
acquiring, by using the image capturing component, a human image containing a human body feature in a target environment;
detecting and obtaining, by using the WiFi detector, unique identification information of at least one WiFi terminal located in the target environment; and
correlating the human image with the unique identification information of the at least one WiFi terminal to generate image data including the human image containing the human body feature and the unique identification information.

In an eighteenth aspect, an embodiment of the present disclosure provides an application program, which is configured to, when being executed, carry out a video monitoring method according to the second aspect of embodiments of the present disclosure; the video monitoring method according to the second aspect of embodiments of the present disclosure is applied to a video monitoring system. The video monitoring system includes an image acquisition apparatus and a digital video recorder, wherein the image acquisition apparatus is provided with a WiFi detector and an image capturing component; the method includes:
acquiring, by the image acquisition apparatus using the image capturing component, a human image containing a human body feature in a target environment; detecting and obtaining, by the image acquisition apparatus using the WiFi detector, unique identification information of at least one WiFi terminal located in the target environment; correlating the human image with the unique identification information of the at least one WiFi terminal to generate image data including the human image containing the human body feature and the unique identification information; and sending the generated image data including the human image containing the human body feature and the unique identification information to the digital video recorder; and
receiving and storing, by the digital video recorder, the image data including the human image containing the human body feature and the unique identification information sent by the image acquisition apparatus.

In a nineteenth aspect, an embodiment of the present disclosure provides an application program, which is configured to, when being executed, carry out the video monitoring method according to the seventh aspect of embodiments of the present disclosure; wherein the video monitoring method according to the seventh aspect of embodiments of the present disclosure is applied to an image acquisition apparatus in a video monitoring system, wherein the image acquisition apparatus is provided with a WiFi detector and an image capturing component; the method includes:
detecting and obtaining, by using the WiFi detector, unique identification information of at least one WiFi terminal located in a target environment;
obtaining a human image containing a human body feature in the target environment, wherein the human image is acquired by the image capturing component during a preset time period comprising a moment for obtaining the unique identification information; and
correlating the obtained human image with the unique identification information of the at least one WiFi terminal to generate image data including the human image containing the human body feature and the unique identification information.

In a twentieth aspect, an embodiment of the present disclosure provides an application program, which is configured to, when being executed, carry out the monitoring early warning method according to the eighth aspect of embodiments of the present disclosure; wherein the monitoring early warning method according to the eighth aspect of the present disclosure includes:
detecting and obtaining, by an image acquisition apparatus using a WiFi detector, unique identification information of at least one WiFi terminal located in a target environment; obtaining a multi-frame human image containing a human body feature in the target environment, wherein the multi-frame human image is acquired by an image capturing component during a preset time period comprising a moment for obtaining the unique identification information; correlating the obtained multi-frame human image with the unique identification information of the at least one WiFi terminal to generate image data including the human image containing the human body feature and the unique identification information; sending the generated image data including the human image containing the human body feature and the unique identification information to a digital video recorder;
receiving and storing, by the digital video recorder, the image data including the human image containing the human body feature and the unique identification information; sending the image data including the human image containing the human body feature and the unique identification information to an early warning signal output device; and
after receiving the image data including the human image containing the human body feature and the unique identification information, outputting, by the early warning signal output device, the image data including the human image containing the human body feature and the unique identification information.

In a twenty-first aspect, an embodiment of the present disclosure provides an application program, which is configured to, when being executed, carry out a video monitoring method according to the tenth aspect of embodiments of the present disclosure; wherein the video monitoring method according to the tenth aspect of embodiments of the present disclosure is applied to a digital video recorder in a video monitoring system, wherein the video monitoring system further includes: a WiFi detector and an image acquisition apparatus for performing image acquisition for a target environment; the method includes:
obtaining unique identification information of at least one WiFi terminal located in the target environment detected by using the WiFi detector;
obtaining a multi-frame human image containing a human body feature in the target environment, wherein the multi-frame human image is acquired by the image acquisition apparatus during a preset time period comprising a moment for obtaining the unique identification information; and
correlating the obtained multi-frame human image with the unique identification information of the at least one WiFi terminal to generate image data including the human image containing the human body feature and the unique identification information.

Since embodiments of the applications and storage media are substantially similar to method embodiments, they are described briefly and reference may be made to depictions of the method embodiments for relevant portions.

What are stated above are only preferred embodiments of the present disclosure and not intended to limit the present disclosure. Any modifications, equivalent substitutions and improvements made within the spirit and principle of the present disclosure all should be included in the extent of protection of the present disclosure.

## Claims

1. An image acquisition method, which is applied in an image acquisition apparatus in a video monitoring system, wherein the image acquisition apparatus is provided with a WiFi detector and an image capturing component; the method comprises:
acquiring, by using the image capturing component, a human image containing a human body feature in a target environment;
detecting and obtaining, by using the WiFi detector, unique identification information of at least one WiFi terminal located in the target environment; and
correlating the human image with the unique identification information of the at least one WiFi terminal to generate image data comprising the human image containing the human body feature and the unique identification information.

2. The method according to claim 1, wherein detecting and obtaining, by using the WiFi detector, unique identification information of at least one WiFi terminal located in the target environment comprises:
detecting, by using the WiFi detector, WiFi signal intensity values of WiFi terminals located in the target environment, and obtaining unique identification information of at least one WiFi terminal with a WiFi signal intensity value greater than a predetermined intensity threshold.

3. The method according to claim 1, wherein detecting and obtaining, by using the WiFi detector, unique identification information of at least one WiFi terminal located in the target environment comprises:
detecting, by using the WiFi detector, WiFi signal durations of WiFi terminals located in the target environment, and obtaining unique identification information of at least one WiFi terminal with a WiFi signal duration greater than a predetermined duration threshold.

4. The method according to any of claims 1-3, wherein the method further comprises:
sending the generated image data comprising the human image containing the human body feature and the unique identification information to a digital video recorder so that the digital video recorder receives and stores the image data comprising the human image containing the human body feature and the unique identification information.

5. A video monitoring method, which is applied in a video monitoring system comprising an image acquisition apparatus and a digital video recorder, wherein the image acquisition apparatus is provided with a WiFi detector and an image capturing component; the method comprises:
acquiring, by the image acquisition apparatus using the image capturing component, a human image containing a human body feature in a target environment; detecting and obtaining, by the image acquisition apparatus using the WiFi detector, unique identification information of at least one WiFi terminal located in the target environment; correlating the human image with the unique identification information of the at least one WiFi terminal to generate image data comprising the human image containing the human body feature and the unique identification information; and sending the generated image data comprising the human image containing the human body feature and the unique identification information to the digital video recorder; and
receiving and storing, by the digital video recorder, the image data comprising the human image containing the human body feature and the unique identification information sent by the image acquisition apparatus.

6. The method according to claim 5, wherein detecting and obtaining, by the image acquisition apparatus using the WiFi detector, unique identification information of at least one WiFi terminal located in the target environment comprises:
detecting, by the image acquisition apparatus using the WiFi detector, WiFi signal intensity values of WiFi terminals located in the target environment, and obtaining unique identification information of at least one WiFi terminal with a WiFi signal intensity value greater than a predetermined intensity threshold.

7. The method according to claim 5, wherein detecting and obtaining, by the image acquisition apparatus using the WiFi detector, unique identification information of at least one WiFi terminal located in the target environment comprises:
detecting, by the image acquisition apparatus using the WiFi detector, WiFi signal durations of WiFi terminals located in the target environment, and obtaining unique identification information of at least one WiFi terminal with a WiFi signal duration greater than a predetermined duration threshold.

8. An image acquisition apparatus, which is applied in a video monitoring system, wherein the image acquisition apparatus comprises: an image capturing component, a WiFi detector and a data processor; and wherein,
the image capturing component is configured to acquire a human image containing a human body feature in a target environment;
the WiFi detector is configured to detect and obtain unique identification information of at least one WiFi terminal located in the target environment; and
the data processor is configured to acquire, by using the image capturing component, a human image containing a human body feature in a target environment; detect and obtain, by using the WiFi detector, unique identification information of at least one WiFi terminal located in the target environment; correlate the human image with the unique identification information of the at least one WiFi terminal to generate image data comprising the human image containing the human body feature and the unique identification information.

9. The image acquisition apparatus according to claim 8, wherein the data processor is configured to detect, by using the WiFi detector, WiFi signal intensity values of WiFi terminals located in the target environment, and obtain unique identification information of at least one WiFi terminal with a WiFi signal intensity value greater than a predetermined intensity threshold.

10. The image acquisition apparatus according to claim 8, wherein the data processor is configured to detect, by using the WiFi detector, WiFi signal durations of WiFi terminals located in the target environment, and obtain unique identification information of at least one WiFi terminal with a WiFi signal duration greater than a predetermined duration threshold.

11. A video monitoring system, comprising: an image acquisition apparatus and a digital video recorder, wherein the image acquisition apparatus comprises: an image capturing component, a WiFi detector and a data processor; and wherein,
the image capturing component is configured to acquire a human image containing a human body feature in a target environment;
the WiFi detector is configured to detect and obtain unique identification information of at least one WiFi terminal located in the target environment;
the data processor is configured to acquire, by using the image capturing component, a human image containing a human body feature in a target environment; detect and obtain, by using the WiFi detector, unique identification information of at least one WiFi terminal located in the target environment; correlate the human image with the unique identification information of the at least one WiFi terminal to generate image data comprising the human image containing the human body feature and the unique identification information; and send the generated image data comprising the human image containing the human body feature and the unique identification information to the digital video recorder; and
the digital video recorder is configured to receive and store the image data comprising the human image containing the human body feature and the unique identification information sent by the image acquisition apparatus.

12. The video monitoring system according to claim 11, wherein the data processor is configured to detect, by using the WiFi detector, WiFi signal intensity values of WiFi terminals located in the target environment, and obtain unique identification information of at least one WiFi terminal with a WiFi signal intensity value greater than a predetermined intensity threshold.

13. The video monitoring system according to claim 11, wherein the data processor is configured to detect, by using the WiFi detector, WiFi signal durations of WiFi terminals located in the target environment, and obtain unique identification information of at least one WiFi terminal with a WiFi signal duration greater than a predetermined duration threshold.

14. A video monitoring method, which is applied in an image acquisition apparatus in a video monitoring system, wherein the image acquisition apparatus is provided with a WiFi detector and an image capturing component; the method comprises:
detecting and obtaining, by using the WiFi detector, unique identification information of at least one WiFi terminal located in a target environment;
obtaining a human image containing a human body feature in the target environment, wherein the human image is acquired by the image capturing component during a preset time period comprising a moment for obtaining the unique identification information; and
correlating the obtained human image with the unique identification information of the at least one WiFi terminal to generate image data comprising the human image containing the human body feature and the unique identification information.

15. The method according to claim 14, wherein detecting and obtaining, by using the WiFi detector, unique identification information of at least one WiFi terminal located in the target environment comprises:
detecting, by using the WiFi detector, a WiFi signal intensity value of at least one WiFi terminal located in the target environment, and obtaining unique identification information of at least one WiFi terminal with a WiFi signal intensity value greater than a predetermined intensity threshold.

16. The method according to claim 14, wherein detecting and obtaining, by using the WiFi detector, unique identification information of at least one WiFi terminal located in the target environment comprises:
detecting, by using the WiFi detector, WiFi signal durations of WiFi terminals located in the target environment, and obtaining unique identification information of at least one WiFi terminal with a WiFi signal duration greater than a predetermined duration threshold.

17. The method according to claim 14, wherein detecting and obtaining, by using the WiFi detector, unique identification information of at least one WiFi terminal located in the target environment comprises:
during a preset suspicious time period, detecting and obtaining, by using the WiFi detector, the unique identification information of the at least one WiFi terminal located in the target environment.

18. The method according to any of claims 14-17, wherein the method further comprises:
sending the generated image data comprising the human image containing the human body feature and the unique identification information to a digital video recorder so that the digital video recorder receives and stores the image data comprising the human image containing the human body feature and the unique identification information.

19. A monitoring early warning method, comprising:
detecting and obtaining, by an image acquisition apparatus using a WiFi detector, unique identification information of at least one WiFi terminal located in a target environment; obtaining a multi-frame human image containing a human body feature in the target environment, wherein the multi-frame human image is acquired by an image capturing component during a preset time period comprising a moment for obtaining the unique identification information; correlating the obtained multi-frame human image with the unique identification information of the at least one WiFi terminal to generate image data comprising the human image containing the human body feature and the unique identification information; sending the generated image data comprising the human image containing the human body feature and the unique identification information to a digital video recorder;
receiving and storing, by the digital video recorder, the image data comprising the human image containing the human body feature and the unique identification information; sending the image data comprising the human image containing the human body feature and the unique identification information to an early warning signal output device; and
after receiving the image data comprising the human image containing the human body feature and the unique identification information, outputting, by the early warning signal output device, the image data comprising the human image containing the human body feature and the unique identification information.

20. The method according to claim 19, wherein the method further comprises:
during a preset suspicious time period, detecting and obtaining, by the image acquisition apparatus using the WiFi detector, the unique identification information of the at least one WiFi terminal located in the target environment.

21. A monitoring early warning system, comprising: an image acquisition apparatus, a digital video recorder and an early warning signal output device;
wherein the image acquisition apparatus comprises: a WiFi detector, an image capturing component, and a data processor; and
wherein the WiFi detector is configured to detect unique identification information of at least one WiFi terminal located in a target environment;
the image capturing component is configured to acquire a multi-frame image containing a human body feature in the target environment;
the data processor is configured to detect and obtain, by using the WiFi detector, unique identification information of at least one WiFi terminal located in a target environment; obtain a multi-frame human image containing a human body feature in the target environment, wherein the multi-frame human image is acquired by the image capturing component during a preset time period comprising a moment for obtaining the unique identification information; correlate the obtained multi-frame human image with the unique identification information of the at least one WiFi terminal to generate image data comprising the human image containing the human body feature and the unique identification information; send the generated image data of the human image containing the human body feature and the unique identification information to a digital video recorder;
the digital video recorder is configured to receive and store the image data comprising the human image containing the human body feature and the unique identification information; send the image data comprising the human image containing the human body feature and the unique identification information to an early warning signal output device; and
the early warning signal output device is configured to, after receiving the image data comprising the human image containing the human body feature and the unique identification information, output the image data comprising the human image containing the human body feature and the unique identification information.

22. A video monitoring method, which is applied in a digital video recorder in a video monitoring system, wherein the video monitoring system further comprises a WiFi detector and an image acquisition apparatus for acquiring images in a target environment; the method comprises:
obtaining unique identification information of at least one WiFi terminal located in the target environment detected by using the WiFi detector;
obtaining a multi-frame human image containing a human body feature in the target environment, wherein the multi-frame human image is acquired by the image acquisition apparatus during a preset time period comprising a moment for obtaining the unique identification information; and
correlating the obtained multi-frame human image with the unique identification information of the at least one WiFi terminal to generate image data comprising the human image containing the human body feature and the unique identification information.

23. The method according to claim 22, wherein obtaining a multi-frame human image containing a human body feature in the target environment comprises:
determining a first position relationship of the WiFi terminal relative to the WiFi detector;
determining a first image acquisition apparatus for acquiring a multi-frame human image containing human body feature, according to the first position relationship and a preset second position relationship between the WiFi detector and the image acquisition apparatus; and
obtaining the multi-frame human image containing human body feature acquired by the first image acquisition apparatus.

24. The method according to claim 22, wherein, the WiFi detector is disposed in the digital video recorder, and obtaining unique identification information of at least one WiFi terminal located in the target environment detected by using the WiFi detector comprises:
detecting and obtaining, by the digital video recorder using the WiFi detector, the unique identification information of the at least one WiFi terminal located in the target environment.

25. The method according to claim 22, wherein, the WiFi detector is disposed in the image acquisition apparatus, and obtaining unique identification information of at least one WiFi terminal located in the target environment detected by using the WiFi detector comprises:
receiving the unique identification information of the at least one WiFi terminal located in the target environment reported by the image acquisition apparatus, wherein the unique identification information of the WiFi terminal is the unique identification information of the at least one WiFi terminal located in the target environment detected and obtained by the image acquisition apparatus using the WiFi detector.

26. The method according to claim 22, wherein obtaining a multi-frame human image containing a human body feature in the target environment comprises:
receiving a multi-frame human image containing a human body feature in the target environment reported by the image acquisition apparatus.

27. The method according to claim 22, wherein obtaining a multi-frame human image containing human body feature in the target environment comprises:
controlling the image acquisition apparatus to acquire a multi-frame human image containing a human body feature in the target environment.

28. A digital video recorder, which is applied in a video monitoring system, wherein the video monitoring system further comprises: a WiFi detector and an image acquisition apparatus for acquiring images in a target environment; the digital video recorder comprises:
a data processor configured to obtain unique identification information of at least one WiFi terminal located in the target environment detected by using the WiFi detector; obtain a multi-frame human image containing a human body feature in the target environment, wherein the multi-frame human image is acquired by the image acquisition apparatus during a preset time period comprising a moment for obtaining the unique identification information; correlate the obtained multi-frame human image with the unique identification information of the at least one WiFi terminal to generate image data comprising the human image containing the human body feature and the unique identification information.

29. A storage medium, wherein the storage medium is configured to store an application program for carrying out the image acquisition method according to claim 1 when being executed.

30. A storage medium, wherein the storage medium is configured to store an application program for carrying out the video monitoring method according to claim 5 when being executed.

31. A storage medium, wherein the storage medium is configured to store an application program for carrying out the video monitoring method according to claim 14 when being executed.

32. A storage medium, wherein the storage medium is configured to store an application program for carrying out the monitoring early warning method according to claim 19 when being executed.

33. A storage medium, wherein the storage medium is configured to store an application program for carrying out the video monitoring method according to claim 22 when being executed.

34. An application program, wherein the application program is configured to carry out the image acquisition method according to claim 1 when being executed.

35. An application program, wherein the application program is configured to carry out the video monitoring method according to claim 5 when being executed.

36. An application program, wherein the application program is configured to carry out the video monitoring method according to claim 14 when being executed.

37. An application program, wherein the application program is configured to carry out the monitoring early warning method according to claim 19 when being executed.

38. An application program, wherein the application program is configured to carry out the video monitoring method according to claim 22 when being executed.
